# EUROPEAN PATENT SPECIFICATION

(11) **EP 2 276 783 B1**
(45) Date of publication and mention of the grant of the patent: **05.08.2020**
(21) Application number: 09745555.4
(22) Date of filing: 13.05.2009
(51) Int. Cl.: C08G 18/08, C08G 18/12, C09D 175/04, C09D 5/14

(54) **ANTI-MICROBIAL POLYURETHANE DISPERSION, METHOD FOR THE MANUFACTURE THEREOF, APPLICATION METHOD AND ARTICLES PROVIDED WITH AN ANTI-MICROBIAL COATING**
ANTIMIKROBIELLE POLYURETHANDISPERSION, HERSTELLUNGSVERFAHREN DAFÜR, ANWENDUNGSVERFAHREN UND ARTIKEL MIT EINER ANTIMIKROBIELLEN BESCHICHTUNG
DISPERSION DE POLYURÉTHANE ANTIMICROBIENNE, PROCÉDÉ DE FABRICATION DE CELLE-CI, PROCÉDÉ D'APPLICATION ET ARTICLES DOTÉS D'UN REVÊTEMENT ANTIMICROBIEN

(30) Priority: 15.05.2008 NL 1035424
(43) Date of publication of application: 26.01.2011
(73) Proprietor: Croda International PLC, Goole, East Yorkshire DN14 9AA (GB)
(72) Inventor: MAHMOUD, Hossein, 5144 VV Walwijk (NL)
(74) Representative: King, Angela Louise
(86) International application number: PCT/EP2009/003402
(87) International publication number: WO 2009/138221

(56) References cited:
- WO-A-02/10242
- WO-A-02/10244
- WO-A-2006/077049
- US-A- 5 494 987

## Description

### Technical Field

The present invention relates to water-borne polyurethane dispersions comprising an anti-microbial compound and a method for the manufacture thereof. The present invention also relates to a method for the application of such a polyurethane dispersion as a coating on the surface of objects and objects provided with said coating.

### Background

The possibility that bacteria and/or other micro-organisms such as moulds and algae accumulate on surfaces, may form a threat to human health, particularly in the case of bacteria. This problem is particularly prolific in situations where lots of people gather and/or in situations where there are people with a lowered resistance. Such situations occur in, for example, hospitals, nursing homes and care homes for the elderly.

Several ways of tackling the problem of accumulation of micro-organisms on surfaces are well known in the art, for example manufacturing objects of a material having an anti-microbial effect or treating the surface of existing objects with anti-microbial substances.

Examples of manufacturing objects of a material with an anti-microbial effect are the manufacture of work surfaces for kitchens and packaging materials for food. In these applications, the objects are produced of special materials that have an anti-microbial effect.

Methods of treating existing objects may for example be an air treatment, whereby an anti-microbial substance is distributed in the atmosphere. However, such an approach is bad for the environment in general, and also toxic for humans.

Another known method of treating existing objects provides a different type of solution, namely a paint-like coating with anti-microbial properties that can be applied to existing objects after manufacture, for example suitable coating compositions may comprise water-borne polyurethane dispersions containing an anti-microbial compound.

Polyurethane is a generic term used to describe polymers prepared by the reaction of a polyfunctional isocyanate with a polyfunctional alcohol to form urethane linkages.

The term "polyurethane" has also been used more generically to refer to the reaction products of polyisocyanates with any polyactive hydrogen compound including polyfunctional alcohols, amines, and mercaptans. Polyurethanes are used in a variety of applications including as elastomers, adhesives, coatings, and impregnating agents.

The international patent publication WO-2006/047746 describes a method for manufacturing a water-borne dispersion of a polyurethane polymer. Although the described method can be followed to a significant extent, the document does not describe or suggest the anti-microbial compounds of the present invention.

WO02/10242 discloses a polyurethane dispersion and a method of making thereof. The disclosed dispersion is stable in an alcohol-water mixture and is a reaction product of (a) an isocyanate functional pre-polymer comprising the reaction product of: i) at least one oligomeric polyactive hydrogen compound, wherein said compound is an alkyl, aryl, or aralkyl structure optionally substituted in and/or on the chain by N, O, S and combinations thereof, and wherein the compound is insoluble in 50:50 weight percent of said alcohol-water mixture; ii) at least one polyisocyanate; and iii) at least one polyactive hydrogen compound soluble in the alcohol-water mixture selected from the group consisting of a compound containing an ionic group, a compound containing a moiety capable of forming an ionic group, a compound containing a polyester, polyether, or polycarbonate group having a ratio of 5 or less carbon atoms for each oxygen atom, and mixtures thereof; and (b) at least one polyfunctional chain extender.

A disadvantage of polyurethane dispersions comprising an anti-microbial compound known from WO02/10242 is that once a coating has been applied to a surface of an object, the anti-microbial is poorly immobilized in the coating especially at the surface of the coating, which may result in easy release of the anti-microbial compound from the coated surface, in particular when such surfaces are frequently cleaned with organic solvents or even with water, optionally including surfactants.

Another disadvantage of the polyurethane dispersions known from the prior art is that a stable dispersion requires the use of substantial amounts of organic solvents during the manufacture of the dispersions, which solvents remain present as a substantial ingredient in the final product.

It is an object of the present invention to provide a polyurethane dispersion comprising an anti-microbial compound with an improved anti-microbial effect and that omits or at least mitigates at least part of the above mentioned draw-backs.

### Summary of the invention

The present invention generally relates to a water-borne polyurethane dispersion comprising:
a. a neutralized polyurethane polymer which is the reaction product of a poly-isocyanate, a polyol, a C₁-C₅ diol with an organic carboxylic acid group (COOH), and a diamine, the polymer being neutralized with a component which contains at least one tertiary amine; and
b. an anti-microbial compound of the formula nR-X⁺Y⁻, wherein n is 4 or 5, R-groups are C₁-C100 hydrocarbyl groups which may be the same or different, X⁺ is a positively charged ion with valency n, Y⁻ is a negatively charged ion.

The R-groups may preferably be C₅-C₅₀ hydrocarbyl groups, more preferably C₁₀-C₂₀ hydrocarbyl groups, optionally comprising hetero atoms in the backbone, for example N, O, P, S, etc.

R groups may be the same or different and include but are not limited to branched and unbranched aliphatic hydrocarbyl chains, substituted chains with groups containing heteroatoms such as S and/or O and/or N, chains containing aliphatic and/or cyclo-aliphatic and/or aromatic groups in the backbone or as substituents, saturated and unsaturated chains.

X⁺ is a positively charged ion with valency n, for example N⁺, P⁺ (n=4) or S⁺ (n=5), Y⁻ is a anion, for example sulphate, nitrate, phosphate, acetate or a halogen ion. Preferably the anion may be a halogen ion, e.g. chlorine, bromine, iodine, fluorine.

In an embodiment of the invention, the anti-microbial compound of the formula nR-X⁺Y⁻ has a molecular weight of more than 1,000 g/mol, preferably between 1,000 g/mol and 15,000 g/mol, more preferably between 5,000 g/mol and -10,000 g/mol. It is therefore preferable that the active molecule (AM) of the formula nR-X⁺Y⁻ is a polymer. An example of a preferred AM is poly (diethyl tetra decane ammonium ethyl)methacrylate). An advantage of using an AM of high molecular weight in the poly-urethane dispersion is that during drying of an applied coating layer, evaporation of the AM is prohibited or at least mitigated. Another advantage is that a high molecular AM makes the coating less hydrophilic.

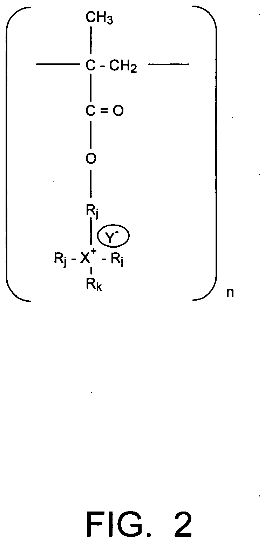

In an embodiment of the invention, the anti-microbial compound is a polymer as shown in Fig. 2, wherein Rᵢ and Rⱼ denote a C₁-C₂₀ group, preferably a C₁-C₁₀, for example an ethyl-group, and Rₖ denotes a longer chain having between 3 and 100, preferably between 5 and 50 carbon atoms, whereby C₁₄ is most preferred as such a chain has an optimum bacterial exterminating effect.

In accordance with the claims of the present invention, the anti-microbial compound is a polymer in particular a copolymer in which the neutralizing functionality of the tertiary amine and the anti-microbial functionality may be combined. Such a copolymer may be for example an acrylate copolymer comprising at least two types of building blocks [BB1] and [BB2], respectively. [BB1] may for example comprise an acrylate ester group with a tertiary amine and [BB2] may for example comprise an acrylate ester group with the anti-microbial compound of the formula nR-X⁺Y⁻. Such compounds have the advantage that the anti-microbial groups are well immobilized in the coating after application and drying thereof. Another advantage is that such copolymers show strong interactions with the prepolymer in the coating composition. The presence of anti-microbial groups at the surface of the coated object remains virtually constant in time, even when the surface is frequently cleaned with organic solvents or water optionally including additives in particular surfactants.

The present invention further relates to a manufacturing method of such water-borne polyurethane dispersions in accordance with claim 9, comprising the simplified steps of:
1. preparing a urethane-pre-polymer composition (UPP);
2. neutralizing the UPP with a component which contains at least one tertiary amine, namely an anti-microbial compound which is a copolymer comprising building blocks [BB1] and [BB2] as described in the claims to obtain a neutralized urethane-pre-polymer (NUPP);
3. mixing the thus obtained composition with water at a temperature in the range of 10°C to 60°C;
4. polymerizing the NUPP by adding a diamine.

In an embodiment of the invention wherein the anti-microbial compound is a copolymer wherein the neutralizing functionality of the tertiary amine and the anti-microbial functionality are combined as described above, steps 2 and 3 of the above described method may be combined in a single step.

The present invention also relates to a method for the application of a previously described water-borne polyurethane dispersion or a water-borne polyurethane dispersion obtained by the previously described manufacturing methods, as a coating on existing objects. The method comprises the steps of:
- applying the polyurethane dispersion onto a surface of an article to be treated;
- evaporating the water whereby nR-X⁺Y⁻ assumes the position of the tertiary amine. After application to an object and the evaporation of the solvent, sound adhesion of the coating with anti-microbial effect to the object in question will be the result.

The present invention further relates to articles treated according to the above described method. Such articles are, for example working surfaces in hospitals, elderly homes nursing homes or any other public space, e.g. airports, train stations, etc; medical instruments; surgical instruments; food industry: e.g. food packaging; swimming pools; ship industry (anti-fouling); keyboards, mobile phones (gsm); doorknobs.

### Detailed description

In brief summary, the inventive dispersion is made by forming an isocyanate functional pre-polymer (step 1), neutralizing the pre-polymer with a compound comprising at least one tertiary amine group (step 2), adding a solution of anti-microbial compound (step 3), mixing the obtained composition with water (step 4) followed by chain extension of the pre-polymer by adding a diamine (step 5), and optionally chain termination of the pre-polymer to yield a polyurethane dispersion. Although it is preferred to carry out the foregoing steps sequentially, this is not necessary. The order of steps may be changed and certain steps can be combined, such as chain extension and chain termination or pre-polymer formation and chain termination, etc. The steps, and the components necessary to carry them out are discussed below, whereby reference is made to the said document for more details.

The invention will now be explained in more detail with reference to the appended figures:
FIG. 1 structural formula of an anti-microbial compound of general formula nR-X⁺Y⁻;
FIG. 2 structural formula of a polymeric anti-microbial compound according to the present invention;
FIG. 3 structural formula of building blocks 1 and 2, respectively, of a copolymer having anti-microbial properties, according to the present invention.

### Step 1: Pre-polymer Formation

In a first step, three components are dissolved in a solvent. The first component is a poly-isocyanate, the second component is at least one polyactive hydrogen compound (referred to as Component A for convenience), for example a polyol, and the third component being at least one active hydrogen compound (referred to a Component B for convenience) selected from the group consisting of a compound containing an ionic group, a compound containing a moiety capable of forming an anionic group, a compound containing a polyester, polyether of polycarbonate group having a ratio of 5 or less carbon atoms for each oxygen atom, and mixtures thereof, for example a short diol with an organic carboxylic acid group (COOH) having 2-20 carbon atoms, preferably 2-10 carbon atoms, more preferably 2-5 carbon atoms . The preferred molar ratio of isocyanate groups to hydroxyl groups is between 0.2:1 and 5:1, preferably between 1.5:1 and 3:1, more preferably between 1.8:1 and 2.2:1, for example 1.9:1 molar. These components are allowed to react with each other, to ultimately form a polyurethane pre-polymer, which is extended at a later stage.

### Polv-isocvanates

Representative polyisocyanates that can be used to form the isocyanate functional polyurethane include aliphatic and aromatic polyisocyanates. Suitable polyisocyanates are preferably aliphatic or cyclo-aliphatic isocyanates. The aromatic isocyanates are less preferred as they tend to discolor in ultraviolet light making them undesirable in outdoor applications. Useful polyisocyanates include those described in US-A 3,700,643 (Smith et al.) and US-A 3,600,359 (Miranda). Mixtures of polyisocyanates can also be used, such as ISONATE 2143L, available from Dow Chemical Co., Midland, MI, USA.

In an embodiment of the invention, the poly-isocyanate is a di-isocyanate with the general formula:

OCN-R1-NCO (1)

wherein R1 is indicative indicative of branched and unbranched chains, substituted chains with groups containing heteroatoms such as S and/or O and/or N, chains containing aliphatic and/or cyclo-aliphatic and/or aromatic groups in the backbone or as substituents, saturated and unsaturated chains, having 1-100, preferably 1-50, more preferably 2-25 and most preferably 2-15 carbon atoms

Particularly preferred diisocyanates include dicyclohexylmethane 4,4'diisocyanate (commonly referred to as H₁₂MDI) and 3,5,5-trimethyl-1-isocyanato-3-isocyanatomethylcyclohexane (commonly referred to as isophorone diisocyanate, abbreviated as IPDI), both available from Bayer Corp., Pittsburgh, PA, USA under the trade designations DESMODUR W and DESMODUR 1, respectively. Other preferred diisocyanates and polyisocyanates include (i) tetramethylene diisocyanate, (ii) 1,3-bis(isocyanatomethyl) cyclohexane, (iii) 1,3-bis(1-isocyanato-1-methylethyl)benzene, (iv) diphenylmethane 4,4'-diisocyanate (commonly referred to as MDI), (v) 4,4',4"-triisocyanatotriphenylmethane, (vi) polymethylene polyphenylene polyisocyanate (commonly referred to as polymeric MDI), (vii) toluene diisocyanate (commonly referred to as TDI), (viii) hexamethylene diisocyanate (commonly referred to as HDI), (ix) dodecamethylene diisocyanate, and (x) m-and p-xylene diisocyanate.

In a preferred embodiment the diisocyanate is isophorone-di-isocyanate (IPDI). The structural formula of this is as follows:

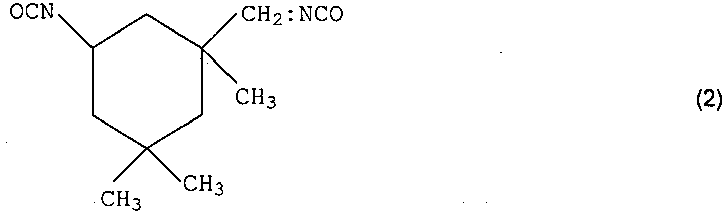

### Component A

Component A is insoluble in the lower alcohol-water solvent mixture where the lower alcohol to water ratio is at least 50: 50 by weight. In the sentence, the term "insoluble" means generally that at least 1 gram of the compound is not soluble in about 4 grams of alcohol-water at about 25°C, when the alcohol to water ratio is at least 50: 50 by weight. Certain polyols may require heating to melt to determine whether they are insoluble using this characterization method. The alcohol used in this characterization method should be the same alcohol used to prepare the dispersion.

Compounds useful as the Component A have a number average molecular weight preferably between 300 g/mol and 10,000 g/mol, more preferably between 400 g/mol and 5,000 g/mol, and most preferably between 500 g/mol and 3000 g/mol.

Several different types of polyols are suitable for use as the Component A.

In an embodiment, the polyol is a diol with the general formula:

HO-R2-OH (3)

A suitable example is poly-ether-diol, with the formula

HO-R3-[O-Rx]n-OH (4)

In the foregoing, R2, R3 and Rx are indicative of branched and unbranched chains, substituted chains with groups containing heteroatoms such as S and/or O and/or N, chains containing aliphatic and/or cyclo-aliphatic and/or aromatic groups in the backbone or as substituents, saturated and unsaturated chains, having 1-100, preferably 1-50, more preferably 2-25 and most preferably 2-15 carbon atoms. All R-groups may be independently the same or different and the index x serves to make a distinction between the different hydrocarbyl groups in the polyetherdiol.

Monomeric polyols, such as the C₃₆ dimer fatty alcohol available as PRIPOL 2033 from Unichema North America, Chicago, IL, USA, can be used. Oligomeric polyols that have, on average, from about 1.6 to about 4 hydroxyl groups are preferred. One type of preferred oligomeric polyol is aliphatic polyester polyol based on diacids and/or diols that have more than 10 carbon atoms and preferably more than 20 carbon atoms.

Commercially preferred polyester polyols are PRIPLAST 3191, 3192, 3196, 3197, 1906 and 1907 from Unichema North America, Chicago, IL, USA, which are believed to be based on 36 carbon atom diacid and/or diol. Specific constituents used in preparation of these diols are believed to be: for PRIPLAST 3192-dimer acid, adipic acid, and 1,6-hexane diol; for PRIPLAST 3193--dimer acid and ethylene glycol; for PRIPLAST 3194 - dimer acid, adipic acid, and ethylene glycol; for PRIPLAST 3196--dimer acid and 1,6-hexane diol; for PRIPLAST 3197--dimer acid and dimer diol; for PRIPLAST 1906-isophthalic acid and dimer diol; and for PRIPLAST 1907--terephthalic acid and dimer diol. The term "dimer acid" is understood to be a C₃₆ diacid formed by dimerization of unsaturated C₁₈ fatty acids and "dimer diol" is a C₃₆ difunctional polyol formed by hydrogenation of the C₃₆ dimer acid.

Another preferred oligomeric polyol is hydroxy terminated polyalkadienes including polybutadienes and polyisoprenes. A commercially preferred hydroxy terminated polybutadiene is POLY bd resin from Elf Atochem North America, Philadelphia, PA, USA.

Yet another preferred oligomeric polyol is hydrogenated polyalkadiene polyols including hydrogenated polyisoprene and hydrogenated polybutadiene having no less than about 19 wt % 1,2-butadiene addition. Commercially preferred hydrogenated polybutadiene diols include KRATON L2203 from Shell Chemical, Houston, TX, USA and POLYTAIL resins from Mitsubishi Chemical, Tokyo, Japan. A preferred oligomeric polyamine is amine terminated butadiene polymers and butadiene-acrylonitrile copolymers. A commercially preferred amine terminated butadiene-acrylonitrile copolymer is HYCAR ATBN from B. F. Goodrich, Cleveland, OH, USA.

Silicone polyols or polyamines and perflouroalkyl functional polyols may also be used. When it is desired to form films with good self adhesion. These polyols preferably should not be present in greater than about 5 wt % of the polyurethane, as their low surface energy properties would be expected to detract from the desired adhesion characteristics based on the teachings of US-A 5,679,754 (Larson et al).

In addition to polyols that are insoluble in the alcohol-water mixture containing at least 50: 50 lower alcohol to water by weight, low molecular weight "monomeric" polyols may be used in the pre-polymer formation. Examples of the monomeric polyols include ethylene glycol, propylene glycol, butylene glycol, hexamethylene glycol, diethylene glycol, 1, 1, 1-trimethylolpropane, pentaerythritol, aminoethanol, and the like. When used, preferably the amount of the monomeric polyols should be kept low (e. g. less than about 10% by weight) to minimize the viscosity of the pre-polymer.

The amounts of the polyol and isocyanate used to form the pre-polymer affects the physical and chemical properties of the final dispersion. Properties that can be varied include, but are not limited to, ductility, water uptake, tensile strength, modulus, abrasion resistance, minimum film-forming temperature, glass transition temperature, ultraviolet light resistance, resistance to hydrolysis, and color stability. In general, longer chain polyols tend to provide dispersions and films made therefrom that are more ductile and have lower Tg, higher elongation, and lower tensile strength. In contrast, shorter chain polyols tend to provide dispersions and films made therefrom that have high modulus, greater tensile strength, and higher Tg. Aliphatic polyols tend to provide materials with decreased water uptake whereas diols containing heteroatoms in the backbone (i. e., aromatic polyols) tend to have increased water uptake. The amount of water left in the film can affect its tensile and elongation properties. In order to provide resistance to hydrolysis, polyols should be selected that are hydrolytically stable, such as polyether (e. g. polyethylene glycols, polypropylene glycols, and polytetramethylene glycols) and polysiloxane polyols, and polyols based on polyolefin backbones. Polyester polyols may be used that are hydrolytically resistant such as those based on hydrophobic subunits (PRIPLAST polyols from Unichema), those based on isophthalic acid, as well as polycaprolactone polyols. Other polyols are hydrogenated polybutadiene polyols, fluorinated polyether polyols, silicone polyols, and the so called "silicone copolyols," which are polysiloxanes having pendant polyether chains terminated with alcohols or alkyl groups.

### Component B

The polyurethane pre-polymer is made water or alcohol-water dispersible by using a Component B having at least one water or alcohol-water soluble active hydrogen compound. Component B also makes the coating less hydrophilic after drying and may improve the antimicrobial activity.

Preferably, it is a polyactive hydrogen compound. Component B acts primarily to stabilize the polyurethane dispersion in a water or alcohol-water solvent system. The phrase "alcohol-water soluble" means generally that at least 1 gram of the compound is soluble in about 4 grams of an alcohol-water mixture at about 25 C, as described earlier. Certain compounds may require heating to melt to determine whether they are soluble using this characterization method. In general, soluble polyols in a homogenous single phase appear visually transparent. The alcohol-water mixture used in this characterization method should be the same alcohol-water mixture used to prepare the dispersion. Water or alcohol-water solubility is imparted to Component B by the presence of an ionic group, a moiety capable of forming an ionic group, a non-ionic stabilizer in the form of poly (C₂ to C₄) alkyl ether, and mixtures thereof. In general, as the concentration of Component A increases, the amount of stabilizer should also be increased to maintain a stable dispersion.

Suitable components B are for example carboxylic and carboxylate acid functional polyols which include dimethylolpropionic acid and its polyethoxylated derivatives as well as acid grafted polyethers such as the UCARMOD polyols available from Union Carbide Specialty Chemicals Div., Danbury, CT. These can be neutralized with an organic or inorganic base either before or after preparation of the pre-polymer.

To obtain alcohol-water or water dispersibility, the ionic equivalent weight of the pre-polymer (gram pre-polymer per equivalent of ionic functionality) should be in the range of 1000 to 15000, preferably 1500 to 12500, more preferably 2000 to 10000, most preferably 2500 to 7500.

It has been found that poly (i. e., C₂ to C₄) alkyl ethers can function as non-ionic stabilizers. For example, ethylene oxide adduct moieties can be added as the sole stabilizer or in addition to the ionic groups in the polyurethane polymer chain. The ethylene oxide compounds can be any compound derived from the reaction of ethylene oxide having at least one active hydrogen group with the optional addition of other alkylene oxide comonomers in a random or block fashion. Preferred ethylene oxide compounds comprise at least two (2) active hydrogen groups. Examples of suitable ethylene oxide stabilizing compounds include homopolymers of polyethylene oxide (e. g., CARBOWAX), block copolymers of ethylene oxide and propylene oxide (e. g., PLURONIC from BASF Corp., Mount Olive, NJ), random copolymers of ethylene oxide and propylene oxide (e. g., UCON FLUIDS, from Union Carbide, Danbury, CT), silicone copolyols, and surfactants based on polyethylene oxide as described in US-A 4,661,667 (Scholz et al). Surprisingly, it has been found that other higher alkyl polyethers can function as non-ionic stabilizers in alcohol-water solvent systems. For example, polypropylene glycols and even poly (tetramethylene ether) can stabilize dispersions in hydro-alcohol systems, in which the alcohol to water ratio exceeds about 65: 35. The effectiveness of this and other stabilizers is, of course, dependent on the chemical nature of the polyurethane being dispersed and the solvent system.

Examples of oligomeric polyols that have sufficient polar non-ionic groups such as ether or ester functionality to give alcohol-water solubility include (i) polyoxyalkylene diols, triols, and tetrols, (ii) polyoxyalkylene diamines and triamines, (iii) polyester diols, triols, and tetrols of organic polycarboxylic acids and polyhydric alcohols, and (iv) polylactone diols, triols, and tetrols having a molecular weight of 106 to about 2000.

Preferred oligomeric polyols and polyamines include (i) polyethylene oxide homopolymers (e. g., CARBOWAX series from Union Carbide, Danbury, CT), block copolymers of ethylene oxide and propylene oxide (e. g., PLURONIC surfactants from BASF Corporation, Mount Olive, NJ), random copolymers of ethylene oxide and propylene oxide (e. g., UCON FLUIDS from Union Carbide, Danbury, CT), silicone copolyols, as well as surfactants based on polyethylene oxide as described in US-A 4,661,667 (Scholz et al.), (ii) polyoxypropylene diols and triols such as the ACCLAIM series of polyols from Arco Chemical, Newtown Square, PA, (iii) polyether diamines and triamines such as the JEFFAMINE series available from Huntsman Corporation, Salt Lake City, UT, (iv) polyether polyols such as the TERATHANE series (which is a polyoxytetramethylene diol) available from E. I. du Pont Co., Wilmington, DE, and the POLYMEG series available from Quaker Oats Co., Chicago, IL, (v) polyester polyols such as MULTRON, which is a poly (ethyleneadipate) polyol, available from Bayer Corporation, Pittsburgh, PA, (vi) polycarbonate diols such as those available from Stahl USA Co., Peabody, MA, and (vii) polycaprolactone polyols such as the TONE series available from Union Carbide, Danbury, CT. Polythioether polyols are also useful.

To obtain stable dispersions in hydro-alcohol systems, the non-ionic stabilizer is generally present in the polyurethane pre-polymer from 3% to 30%, preferably 4% to 20% and most preferably about 5% to 10% by weight. The amount of non-ionic stabilizer will depend on the hydrophobicity of the pre-polymer and the ratio of lower alcohol to water.

In general, more hydrophobic pre-polymers will require higher amounts of stabilizer.

The general formula of a preferred Component B is: 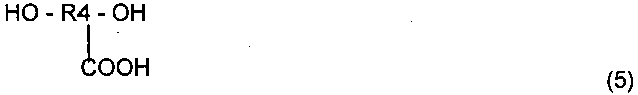 wherein R4 is a C₁-C₅ hydrocarbyl group, preferably consisting of C and H atoms.

The solvent used in the first step is, for example, acetone, methyl ethyl ketone (MEK), methoxypropanol acetate (PM acetate), dimethyl acetamide, tetrahydrofuran, N-methyl-pyrrolidinone, and mixtures thereof.. An acrylate or methacrylate monomer can also be used as a solvent, for example butyl-methacrylate, in which case the ultimate product formed is a polyurethane acrylate. Other hydrophobic solvents are also possible.

The reaction of the components discussed above (i. e., the "A" component, the polyisocyanate, and the "B" component) to form the pre-polymer will depend on their selection. Aromatic isocyanates are generally much more reactive than aliphatic isocyanates and may be reacted with polyols without the need for heat because the reaction will be exothermic. The pre-polymer formation reaction may be run as 100% solids (i. e., little to no solvent) or may be carried out in an optionally organic solvent unreactive with the isocyanate, as mentioned above. Preferably, the solvent used will not require removal in the final dispersion. It is also possible to incorporate solvents and/or plasticizers that are left in the pre-polymer that become part of the finished dispersion.

When using preferred aliphatic isocyanates with polyfunctional alcohols, high solids concentrations and elevated reaction temperatures from about 50°C to 80°C are desirable so that high conversions of monomers to polymer can occur in a reasonable time, e. g., less than eight hours, preferably less than three hours. Preferred embodiments incorporating isophorone diisocyanate or hexamethylene diisocyanate and aliphatic primary or secondary alcohols are typically heated to about 80°C for about 2 hours in the presence of a small amount of catalyst.

Useful catalysts include metal ligands, such as dibutyltin dilaurate and dibutyltin diacetate, and amines, such as triethylamine, DBU (1, 8-diazabicyclo [5.4.0] undec-7-ene), and DABCO (1, 4-diazabicyclo [2.2.2] octane), in useful concentrations of from about 0.01 to 1.0 mole percent (relative to the isocyanate reagent). Preferred catalysts are nonirritating and non-sensitizing to skin. Most preferred catalysts are those that can become bound to the polymer backbone and are thus non-leachable, such as FASTCAT 4224 from Elf Atochem North America, and certain alcohol and amine functional tertiary amine catalysts such as methyldiethanolamine and tetramethylguanidine. In batch preparations from about 100 to 1000 grams, about 0.1 gram of FASTCAT 4224 per 100 gram of total resin is used. A specific example of a suitable catalyst is di-butyl-tin laureate (DBTL)

The ratio of polyisocyanate to polyol is adjusted such that the pre-polymer has a molecular weight of about 1,000 g/mol to 25,000 g/mol. The equivalents of polyisocyanate preferably exceed the total equivalents of polyol (i. e., total equivalents of active hydrogen), the equivalent excess being preferably from 0.1 to 5, more preferably 0.5 to 2, and most preferably from 0.8 to 1.2.

Pre-polymer viscosity should be kept relatively low to facilitate dispersing in the hydro-alcohol solvent system. In general, the pre-polymer viscosity should be less than about 250,000 centipoise (cps), preferably less than about 150, 000 cps, more preferably less than about 100,000 cps and most preferably less than about 75,000 cps as measured at 23 to 25 C using a Brookfield RVT rotovisco viscometer (Brookfield Engineering Laboratories, Stoughton, MA). Alternatively or additionally, the pre-polymer may be heated or solvent may be added to lower the viscosity.

In a preferred embodiment, the solution comprising poly-isocyanate, component A and component B according to formulas 1, 3 and 5 respectively is heated. Preferably a selective protective agent is added, which agent also acts as a selective catalyst, for example di-butyl-tin laureate (DBTL), when a temperature between 45°C and 85°C, preferably between 50°C and 75°C, more preferably between 55°C and 65°C, for example approximately 60 °C has been reached. This selective protective agent protects one of the isocyanate groups of the first component and advances the reaction of the other isocyanate group of the first component. In an example with IPDI as di-isocyanate, the di-isocyanate group on the top right in formula (2) is protected. The reaction takes place in the temperature range of 20°C to 95°C, preferably between 40°C and 90°C, more preferably between 60°C and 85°C, for example at approximately 80°C. The solution is stirred continuously or agitated using another method. The reaction is completed at a temperature of 80°C after approximately 3 hours. Completion of the reaction may take longer at lower temperatures. A urethane-pre-polymer with a free carboxylic acid group has formed, this pre-polymer is denoted as UPP, and may have the following formula (depending on the molar ratio of the poly-isocyanate, component A and component B): 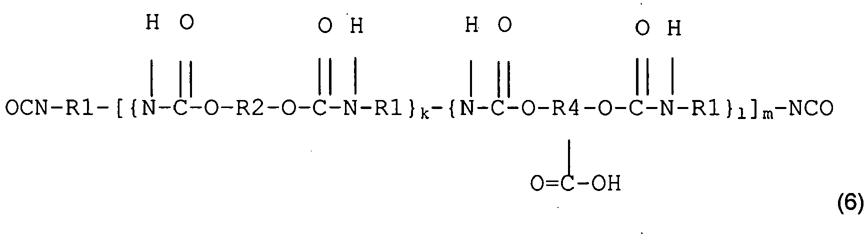 wherein k and I are integers from 0 to 20, preferably from 1-15; the sum of k and I is at least 1, preferably at least 2; m is an integer from 1 to 100; and R1, R2 and R4 have the same meaning as previously discussed.

The UPP chain preferably contains at least one R2 and at least one R4-COOH group. The ratio between both groups in the UPP chain depends on the molar ratio of components A and B in the reaction mixture. Preferably m is an integer between and including 1 and 50, more preferably between 1 and 25. Depending on the molar ratio of the poly-isocyanate, component A and component B, the end groups of the urethane pre-polymer may be -NCO (as shown in formula 6) or-OH. The first may be the case when an excess of NCO-groups with respect to OH- groups is present in the reaction mixture. The latter may be the case when an excess of OH-groups with respect to NCO-groups is present in the reaction mixture. The obtained urethane pre-polymer UPP is still in solution.

### Step 2: Neutralising the free carboxylic acid group of the UPP

In a second step, a fourth component is added to the (preferably still warm) solution, which contains at least one tertiary amine.

In general a tertiary amine is of the formula: 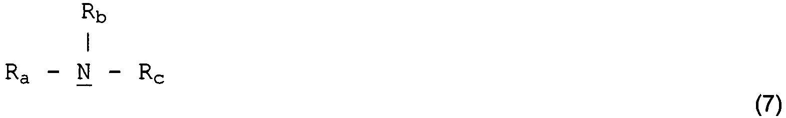 wherein Rₐ, R_{b} and R_{c} are hydrocarbyl groups including aliphatic, cyclo-aliphatic and aromatic groups, that may be independently of one another the same or different. In a preferred embodiment, Rₐ, R_{b} and R_{c} are ethyl- and/or methyl groups Suitable compounds comprising at least one tertiary amine are for example: trimethylamine, triethylamine, dimethylethanolamine (DMEA), dimethylaminoethylmetha-acrylate (DMAEMA), diethylaminoehtylmetha-acrylate (DEAEMA).

The tertiary amine is allowed to react with the carboxylic acid group of the urethane-pre-polymer UPP for a period of approximately 20-30 minutes while constantly stirring: the tertiary amine attracts a hydrogen atom and becomes positively charged, while the COOH group releases its hydrogen atom and becomes negatively charged. The positive and negative groups attract each other, and a complex is formed, which shall be denoted as neutralized urethane-pre-polymer NUPP in the context of the present invention, which is denoted (in accordance with formula 8) in formula form as follows: 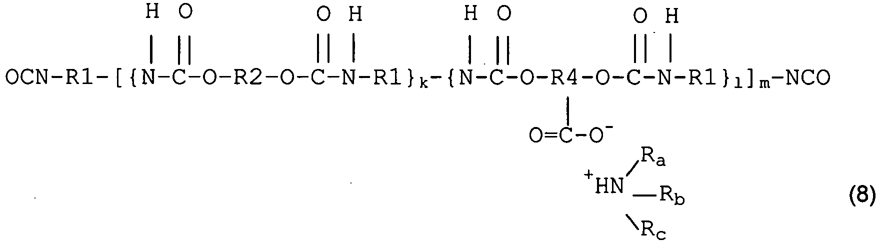 wherein k, l, m, R1, R2, R4, Rₐ, R_{b} and R_{c} have the same meaning as previously discussed.

### Step 3: adding a solution of anti-microbial compound

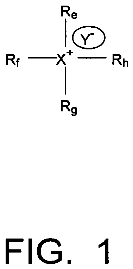

In a third step, a solution of nR-X⁺Y⁻ in a solvent, e.g. acetone, is added to the solution. This is a molecule that has the anti-microbial effect in the ultimate coating, which shall therefore be denoted as active molecule AM, and whereby the general formula is shown in FIG. 1. Where X⁺ is a positively charged ion with valency n, and Y⁻ is an anion, for example sulphate, nitrate, phosphate, acetate or a halogen ion. Preferably the anion may be a halogen ion, for example chlorine, bromine, iodine, fluorine. The positive ion is bound to n hydrocarbyl groups R. In the example in FIG. 1, X⁺ has a valency of four, and four hydrocarbyl groups Rₑ, R_{f}, R_{g}, Rₕ are shown, which hydrocarbyl groups may be independently of one another the same and include but are not limited to branched and unbranched chains, substituted chains with groups containing heteroatoms such as S and/or O and/or N, chains containing aliphatic and/or cyclo-aliphatic and/or aromatic groups in the backbone or as substituents, saturated and unsaturated chains. preferably C₁-C₁₀₀ hydrocarbyl chains, more preferably C₁-C₅₀ hydrocarbyl chains and most preferably C₁-C₂₅ carbon chains are used.

Nitrogen (N) and phosphor (P) are examples of X⁺ with a valency of four. However it is also possible that X⁺ has a valency of five, as is the case with sulphur for example, in which case there would be five hydrocarbyl groups (not illustrated).

Suitable anti-microbial compounds are for example: *N*-alkylated polyethylenimine (N-alkylated-PEI), Poly(4-vinyl-*N*-alkylpyridinium bromide), *N*-hexylated poly(4-vinylpyridine (Hexyl-PVP), polystyrene block -poly(4-vinyl-*N*-methylpyridinium iodide) (P4VMP)[(PS-b-P4VMP), poly[tributyl(4-vinylbenzyl)phosphonium chloride (PTBVBP), poly(arylenesulfonium) salts.

It is stated that the processes for manufacturing nR-X⁺Y⁻ are already known; therefore no further explanation is required.

### Step 4: preparing a dispersion

The solvent used as the dispersing medium is selected from the group consisting of a lower alcohol (C₁ to C₄ branched or straight chain aliphatic alcohol), water, and mixtures thereof. The preferred lower alcohols are ethanol, n-propanol, and 2-propanol (IPA). The most preferred solvents are water, IPA, ethanol, and mixtures thereof. The ratio of lower alcohol to water is generally greater than 50: 50 by weight. Preferably the alcohol to water ratio is 60: 40 to 90: 10 w/w and more preferably the ratio is 70: 30 to 85: 15. In general, higher amounts of alcohol will result in a dispersion that exhibits faster drying times.

For certain dispersions, it was surprisingly found that higher alcohol-water ratios result in lower viscosity dispersions. This result is surprising because at higher alcohol-water ratios, more of the polyurethane polymer would be expected to be solubilized, which would lead to an increase in viscosity. Thus, to achieve low viscosity dispersions at high alcohol-water ratios (i. e., ratios greater than 75: 25), polyols that are insoluble in ethanol (i. e., solubility limit of less than 10% by weight in 200 proof ethanol) are used at concentrations in the pre-polymer of at least 5%, preferably at least 10%, and most preferably at least 15% by weight, based on the total pre-polymer weight. It has been found that at alcohol-water ratios greater than about 90: 10, the polyurethane dispersion and the film produced therefrom tend to have lower tensile strength. It has also been found that secondary alcohol solvents, such as 2-propanol, yield films that have higher tensile strength when compared to films from dispersions prepared in primary alcohol solvents, such as ethanol.

The solvent system may also comprise additional solvents. For example, other rapid evaporating, skin compatible solvents may be used, such as hexamethyldisiloxane (HMDS); cyclic silicones (D4 and D5) ; C₄ to C₁₀ alkanes including isoparafins such as PERMETHYL 97A and ISOPAR C; acetone; hydrofluoroethers (HFEs) and the like.

To achieve rapid evaporation, it is preferred to use "low heat of vaporization solvents", i.e. solvents with heats of vaporization of less than about 150 calorie per gram (cal/g), preferably less than about 125 cal/g, more preferably less than about 100 cal/g and most preferably less than about 90 cal/g. For comparison purposes, water has a heat of vaporization of 540 cal/g, ethanol has a heat of vaporization of 204 cal/g, and isopropyl alcohol has a heat of vaporization of 159 cal/g. The low heat of vaporization solvents may be added to the solvent phase at levels of about 0 to 50%, preferably about 5% to 40%, and more preferably about 10% to 30% by weight of the solvent phase, provided that the low heat of vaporization solvent is miscible with the solvent phase at the given concentration. It has been found that when solvents such as HMDS (heat of vaporization of 44.3 cal/g) and ISOPAR C (heat of vaporization estimated to be about 87 cal/g) are added to the hydro-alcohol solvent mixtures having lower alcohol to water ratios of at least 70: 30 at levels of 10% to 30% by weight, stable dispersions with very rapid dry times result.

The dispersions of the present invention may be prepared in any number of methods. In a first method, the pre-polymer can be added to the alcohol-water solvent mixture as 100% solids or diluted first with a second solvent that may or may not be removed later. If the second solvent is to be removed, it is preferably more volatile than either water or the lower alcohol. In another method, the pre-polymer can be dispersed in part of or in all of the alcohol-water solvent mixture or in a portion of it, with subsequent addition of additional solvents, which can be the same of different solvents. Any additional solvent added after dispersion is preferably added slowly in order to ensure the dispersion maintains stability. In yet another method, the pre-polymer and/or dispersion solvent may be heated or cooled. In yet another method, the pre-polymer may be dispersed in the alcohol-water solvent prior to, simultaneously with, or after the chain extender and chain terminator has been added to the solvent.

The preferred dispersion method involves heating the pre-polymer to temperatures of about 45 to 80 C to reduce its viscosity. The heated pre-polymer is added to a rapidly stirring, high shear mixing apparatus, such as a homogenizer, containing the alcohol-water solvent. Thereafter, the polyamine chain extender is added at a predetermined rate, i.e. a controlled rate. Alternatively, for certain formulations, the polyamine can be added to the solvent mixture first and the heated pre-polymer added to the rapidly mixing solvent mixture.

For an alcohol-water system, the level of lower alcohol is generally at least 20% by weight, preferably at least 40%, more preferably at least 60%, even more preferably at least 70% and most preferably at least 75% by weight. The level of lower alcohol preferably is not more than 95% and more preferably not more than 90% by weight. As used herein,"percent solids" is defined as the percentage of non-volatile components present in the dispersion at room temperature. The percent solids is generally taken as the sum weight of the "A" component, the isocyanate, and the "B" component, as well as any added chain extender, chain terminator, and other added non-volatiles such as plasticizers, continuous phase soluble polymers etc. The percent solids of the dispersion should be above about 15%, preferably greater than 25%, and more preferably greater than about 30%, most preferably greater than about 35%.

In one aspect of the present invention, films can be produced from the dispersion that have very little adhesion or tack to most surfaces such as skin, hair, and glass but have comparatively very high adhesion to themselves. When tested according to the test methods described herein, the ratio of adhesion to self to adhesion to glass is greater than about 2: 1, preferably greater than about 3: 1, more preferably greater than about 5: 1 and most preferably greater than about 10: 1. In certain embodiments, the ratio exceeds 20: 1 and even 30: 1 although such high ratios may not be required for all applications.

It has been found that one requirement for producing high self adhesive coatings is to control the molecular weight of the polyurethane in the final dispersion. The preferred weight average molecular weight is about 10000 to 50000, more preferably about 15000 to 35000 and most preferably about 20000 to 30000 daltons. When the molecular weight is too high, the resulting adhesive has very little self-adhesion. When the molecular weight is too low, the adhesive tends to have higher tack or adhesion to other substrates.

The molecular weight of the polymer in the final dispersion can be controlled in several ways. The first method concerns the alcohol to water ratio used as the dispersing medium. It has been found that for certain polymers, self-adhesion can be achieved at alcohol to water ratios in excess of about 75: 25 wt/wt, preferably above 80: 20, and more preferably at or above about 85: 15. While not wanting to be bound by theory, it is believed that at higher alcohol to water ratios, more of the isocyanate reacts with the mono-functional alcohol solvent, thereby limiting the molecular weight. It is also believed that the higher alcohol ratios result in better solvation and dissolution of the pre-polymer thereby also increasing the likelihood of reaction of the isocyanate groups with the monofunctional lower alcohol solvent.

The molecular weight of the pre-polymer can also be controlled by the type of alcohol used as the solvent. Primary alcohols, such as ethanol, may result in higher selfadhesion than secondary alcohol solvents such as isopropanol.

The molecular weight of the pre-polymer can be further controlled by the process of dispersion and the process of adding the chain extender. At the current time, it is believed that dispersing the pre-polymer in the solvent first, followed by amine addition (as the chain extender) at slower rates, can also improve the level of self-adhesion. A slow amine addition rate, however, can increase the level of tack.

The presently preferred method of controlling the level of self-adhesion is with the use of mono-functional amines added prior to or during the chain extension step. This method will result in end capping of some isocyanate groups thereby limiting the molecular weight. The mono-functional amines generally have the following structure: R5R6NH where R5, and R6 are independently H or C₁ to C₂₂ alkyl; C₆ to C₂₈ aryl, or C₆ to C₂₈ aralkyl optionally substituted in available positions by N, O, and S, including alcohol tertiary amine, quaternary amine, ketone, and carboxylic acid substitutions. Preferred mono-functional amines are those that would have low skin irritation if left unreacted in the formulation, such as 2-amino-2-methylpropanol or higher alkyl primary and secondary amines as well primary and secondary alkanolamines. Monofunctionaly alcohols or mercaptans may also be used to control the molecular weight but these are generally added to the pre-polymer prior to dispersion and chain extension.

The level of ionic stabilizer may also effect self-adhesion. At the current time, it is believed that higher levels of stabilizer may result in lower self-adhesion.

In a preferred embodiment, the mixture of neutralized urethane-pre-polymer NUPP with nR-X⁺Y⁻ is mixed with water in the fourth step in order to obtain a dispersion, at a temperature within the range of 10°C to 60°C, preferably within the range of 15°C to 50°C, most preferably within the range of 20°C to 40°C.

There are two possible variants of preparing a dispersion. In the first variant, water is slowly added drop by drop to the solution while constantly stirring. In the second variant, the solution is slowly added drop by drop to the water while constantly stirring. The hydrophobic organic solvent cannot mix with the water, and a dispersion is created. The neutralized carboxylic acid group of the neutralized urethane-pre-polymer NUPP is polar, while the rest of the polymer molecule is apolar.

### Step 5: chain extending of the pre-polymer

To obtain a dispersion with the desired properties, the molecular weight of the pre-polymer should be increased. This step is accomplished by reacting the pre-polymer with a "chain extender." As used herein the term "chain extender" means a polyactive hydrogen compound having a functionality of about 2 to 4, more preferably 2 to 3, and most preferably 2 and generally having a molecular weight of about 30 to 2000, preferably 30 to 1000. Preferred chain extenders are polyfunctional alcohols, polyfunctional amines, or carboxylic acid hydrazides. Most preferred chain extenders are polyfunctional amines and carboxylic acid hydrazides.

Useful polyfunctional amines include: ethylenediamine; 1,6-diaminohexane, piperazine; tris (2-aminoethyl) amine; and amine terminated polyethers such as JEFFAMINE D230 and JEFFAMINE D400 from Huntsman Corporation, Salt Lake City, UT.

Useful carboxylic acid hydrazide include adipic acid dihydrazide and oxalic acid dihydrazide. Particularly useful polyfunctional alcohols include alkylene diols having 2 to 24 carbon atoms such as ethylene glycol; 1,4 butane diol; and 1,8 octane diol. Useful polythiols include 1,2-ethanedithiol; 1,4-butanedithiol; 2,2'-oxytris (ethane thiol) and di- and tri-mercaptopropionate esters of poly (oxyethylene) diols and triols. Water is also useful as a chain extender as it reacts with isocyanate to form an unstable carbamic acid, which loses carbon dioxide to liberate an amine. This amine is then available to react with another isocyanate. When water is used as the chain extender, catalysts such as bis-(dialkylaminoethyl) ethers should be used that preferentially accelerate the isocyanate/water reaction over the potential reaction between isocyanate and lower alcohol.

When the pre-polymer has a functionality of 2 or less and the chain extender is difunctional, the ratio of isocyanate to active hydrogen in the chain extension step is preferably from about 0.6-1.2 to 1, more preferably from 0.75-1.0 to 1 and most preferably from 0.80-1.0 to 1 (except when water is used as the sole chain extender, in which case water can be present in large molar excess). When the pre-polymer has a functionality higher than 2, due to the use of polyols or polyisocyanates with a functionality greater than 2, the ratio of isocyanate to active hydrogen present in the chain extender should be proportionately adjusted downward to prevent gelation.

The dispersions of the present invention are in water or alcohol-water with relatively high concentrations of a lower alcohol (typically more than 20: 80 w/w alcohol to water). In this environment, endcapping of the isocyanate functional pre-polymer may occur as the isocyanate reacts with the monofunctional alcohol solvent. Therefore, use of a polyfunctional amine as the chain extender is preferred because amines are much more reactive toward isocyanate than the lower alcohol, giving better control of molecular weight. For use on skin where irritation and/or sensitization is a concern, the most preferred ratio of isocyanate equivalents to amine equivalents is about 1: 0.6-0.99 in order to ensure that little to no residual free amine remains in the final dispersion.

The reaction that forms the polyurethane polymer can be stopped by using chain termination species. The chain termination step is optional. Chain termination stops the growing polymer chain thereby controlling the molecular weight and the physical properties of the polymer. In one embodiment, a diamine chain extender is used in excess.

The excess diamine functions as a chain terminator. Another useful chain terminating agent is 2-amino-2-methyl-1-propanol (AMP). It has been found that the chain terminators are useful when used to terminate generally less than about 15% of isocyanate groups on the pre-polymer when used in combination with a difunctional chain extender such as ethylene diamine. Preferably, the chain terminators are used at levels of about 5% to 10% of the total isocyanate equivalents on the pre-polymer, the rest being chain extended with a difunctional chain extender. Monofunctional amines or alcohols are useful as chain terminators. An example of a preferred monofunctional alcohol is ethanol, which can further function as part of the dispersing medium.

In a preferred embodiment, a polymer is formed in the fifth step from the neutralized urethane-pre-polymer NUPP (formula 8), by adding a polyamine to the dispersion, preferably a diamine according to the formula :

H₂N-R*-NH₂ (9)

wherein R*, in principle, may be a hydrocarbyl chain of random length, preferably C₁-C₁₀₀ hydrocarbyl chains, more preferably C₁-C₅₀ hydrocarbyl chains and most preferably C₁-C₂₅ carbon chains are used. R* groups include but are not limited to branched and unbranched chains, substituted chains with groups containing heteroatoms such as S and/or O and/or N, chains containing aliphatic and/or cyclo-aliphatic and/or aromatic groups in the backbone or as substituents, saturated and unsaturated chains.

Examples of suitable diamines are: triethylenediamine, tetraethylenediamine, hydrazine, ethylenediamine; 1,6-diaminohexane, piperazine; tris (2-aminoethyl) amine; and amine terminated polyethers such as JEFFAMINE D230 and JEFFAMINE D400 from Huntsman Corporation, Salt Lake City, UT.

In a modification, one or more H atoms of one or more of the CH₂-groups of this hydrocarbyl chain can be substituted by an NH₂-group, to facilitate cross-linking.

The outermost isocyanate groups of the neutralized urethane-pre-polymer NUPP react with the NH₂-groups of the diamine, to lengthen the NUPP polymer chain and thus creating a polymer that is denoted as polyurethane PU and this can be described as

..... NUPP-R*-NUPP-R*-NUPP ..... (10)

The group linking the R1-group in the NUPP and the R*-group originating from the diamine is a -NH-(C=O)-NH- group.

The polyurethane PU yield in dispersion can be stored until use. The use of the invention comprises applying the dispersion to a surface for treating, using a paintbrush for example. When applied to a surface, the water evaporates and also any residual hydrophobic solvent, including the non-polymerised molecules of the tertiary amine. In order to aid this evaporation process, the preferred tertiary amine is a relatively small molecule, as presented above.

In accordance with a key aspect of the present invention, the active molecule AM assumes the position of the evaporating tertiary amine, so that a polyurethane coating is left behind on the treated surface which contains the active molecule AM. The complex formed is denoted in formula form as follows: 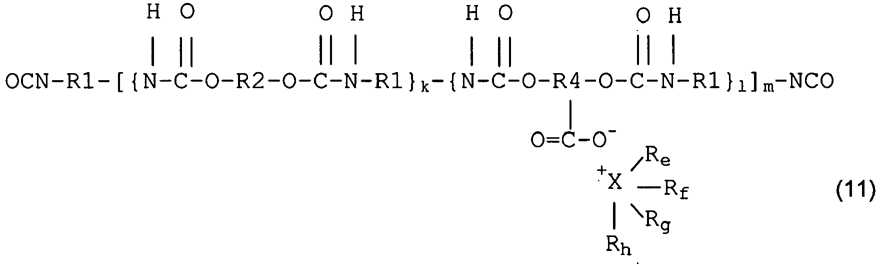 wherein k, l , m, R1, R2, R4, Rₑ, R_{f}, R_{g} and Rₕ have the same meaning as previously discussed. The chain lengthening by means of a diamine (see formula 10) is not discussed here to simplify matters)

If desirable, a crosslinker can be added shortly before use, for example an epoxy such as the commercially available Denacol EX810; the effect of this is that the coating becomes harder. A pigment can also be added if required, so that the coating can be considered as a paint.

In order to simplify the substitution of the tertiary amine by the active molecule AM (i.e. nR-X⁺Y⁻), in particular, to reduce the evaporation of the active molecule AM, a large active molecule is preferred , with an average molecular weight of 1000 g/mol or more. Therefore a polymer as active molecule AM is preferred A preferred polymer is poly(2-diethylamino)ethyl methacrylate) tetradecane bromide quaternary salt (PDETAEMA) which is a chain that is built of building blocks according to the general formula shown in FIG. 2, with X⁺ is N⁺, Rⱼ is ethyl and Rₖ is tetradecyl.

In general, Rᵢ and Rⱼ denotes a C₁-C₂₀ group, preferably a C₁-C_{1O} , for example an ethyl-group, and Rₖ denotes a longer chain having between 3 and 100, preferably between 5 and 50 carbon atoms, whereby C₁₄ is most preferred as such a chain has an optimum bacterial exterminating effect.

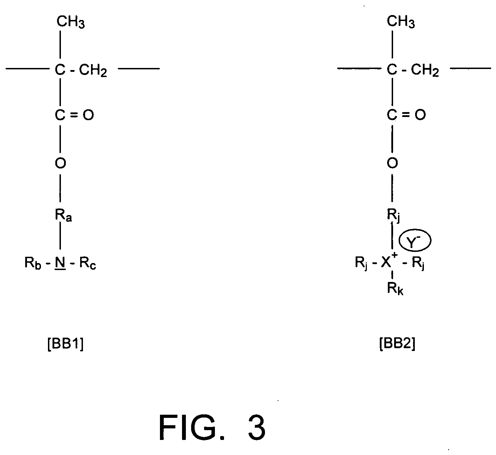

In an alternative embodiment, the fourth component that is added during the second step is a molecule that contains at least one tertiary amine and at least one active group [-X⁺Y⁻]. A copolymer dissolved in a solvent (e.g. acetone or ethylacetate) is preferred. The copolymer is formed as a chain of two different building blocks, whereby the first building block is denoted with [BB1] and the second building block is denoted with [BB2]; the general formulas of these building blocks are shown in FIG. 3 (compare FIG. 2). In an example, X is a nitrogen atom. This copolymer shall be denoted as CP [BB1, BB2] in the following. The exact ratio of the numbers of building blocks [BB1] and [BB2] may vary, preferably the molar ratio is between 1:1 to 50:1, more preferably between 1:1 and 10:1 and most preferably between 1:1 and 5:1. The same applies to the exact sequence of these building blocks in the chain.

In FIG. 3, X⁺, Y⁻, Rₐ, R_{b}, R_{c}, Rⱼ and Rₖ have the same meaning as previously discussed.

With reference to what is stated at formula (8), a complex is obtained that shall be denoted as neutralized urethane-pre-polymer NUPP, and this can be described in formula form as follows: 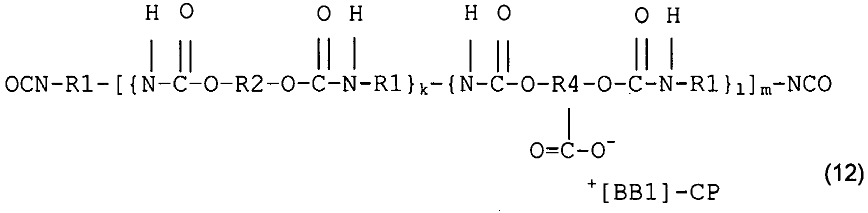 wherein k, I, m, R1, R2 and R4 have the same meaning as previously discussed.

Adding a solution of nR-X⁺Y⁻ during a third step is no longer necessary: this functionality is already present in CP [BB1, BB2], or in other words, the second step and the third step are combined in a single step. The next steps in the process of the alternative embodiment will be referred to as the fourth and fith step, with reference to previously described process steps.

As fourth step, the mixture of neutralized urethane-pre-polymer NUPP with CP [BB1, BB2] is made soluble in water, for which the same applies as was described in relation to the previously described fourth step. The first building blocks [BB1] now assume the function of the tertiary amine described in the foregoing to neutralize the carboxylic acid group of UPP.

As a fifth step a polymer is formed from the neutralized urethane-pre-polymer NUPP, by adding a diamine to the dispersion, as described earlier. Formula (10) applies for the obtained polyurethane PU in dispersion.

When the dispersion is applied to a surface for treating, the water evaporates, and now the second building blocks [BB2] assume the position of the first building blocks [BB1] to couple with the carboxylic acid group of UPP in the PU, so that a polyurethane coating is left behind on the treated surface which contains the active molecule AM. The complex formed is denoted in formula form as follows: 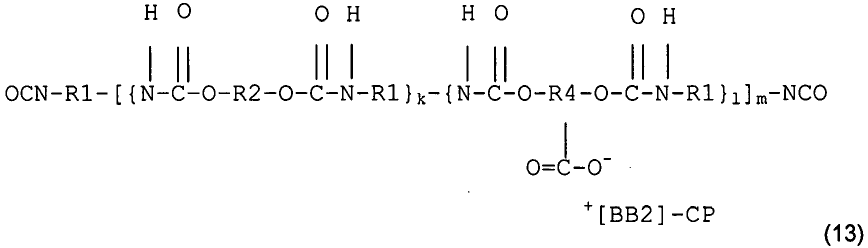 wherein k, I, m, R1, R2 and R4 have the same meaning as previously discussed.

The chain lengthening is by means of the diamine here (see formula 10) and is not discussed to simplify matters)

### Additives

The formulations of the present invention may also include plasticizers that can be added either to the pre-polymer directly or can be added to the solvent mixture. The use of plasticizers may allow for the use of less solvent, and therefore produce more rapidly drying films. Where plasticizers are used, the pre-polymer should be formulated to ensure the plasticized film has sufficient tensile strength. This could require the use of lower molecular weight polyols (lower NCO equivalent weight pre-polymers). Preferred plasticizers are cosmetically acceptable emollients such as those disclosed in US-A 5,951,993 at column, 17 line 35 to column 21, line 6.

Other compounds may be added to enhance or obtain particular properties, provided they do not interfere with the coating, and film forming properties.

The dispersion may contain defoaming agents. Particularly useful defoaming agents include, e. g., Surfynol DF 110L (a high molecular weight acetylenic glycol nonionic surfactant available from Air Products & Chemicals, Inc.), SWS-211 (a silicone additive available from Wacker Silicone Corp), Dehydran TM 1620 (a modified polyol /polysiloxane adduct available from Henkel Corp.), Additive 65 (a silicone additive available from Dow Corning).

The dispersion may also contain flow and leveling agents such as Igepal TM CO630 (an ethoxylated nonylphenol nonionic surfactant available from Rhone-Poulenc Surfactant & Specialty Div.), FLUORAD FC-171 (a nonionic surfactant available from 3M Company), FLUORAD FC-430 (a nonionic surfactant available from 3M Company), and RexolT 25/9 (an alkyl phenol ethoxylate nonionic surfactant available from Hart Chemical Ltd). Optionally, the dispersion may contain rheology modifiers such as the associative thickeners Acrysol RM-825, Acrysol TT-935 all available from Rohm and Haas company.

To increase the service life of the coatings generated from these dispersions, especially in outdoor applications, photostabilizers can be added. Useful photostabilizers include Tinuvin Tm 400, (a hindered amine light stabilizer), Tinuvin Tm 292 (a hindered amine light stabilizer), both commercially available from Ciba-Geigy Ltd. Also, antioxidants, such as IRGANOX 245 available from Ciba-Geigy Ltd., and Naugard-445, a 4,4'-bis (ococ dimethylbenzyl) diphenylamine, available from Uniroyal Chemicals can be added. For applications subjected to ultraviolet light (UV) degradation, at least about 0.1 parts by weight of the UV light stabilizer per 100 parts by weight polyurethane dispersion can be used to inhibit and retard the yellowing and photo degradation. Typically about 0.1 to 10 parts, preferably about 1 to about 10 parts are used per 100 parts of the polyurethane dispersion.

If desirable, a crosslinker can be added shortly before use, for example an epoxy such as the commercially available Denacol EX810; the effect of this is that the coating becomes harder. A pigment can also be added if required, so that the coating can be considered as a paint.

It shall be evident to experts that the invention is not restricted to the execution methods described in the foregoing, but that different variants and modifications thereof are possible within the protection scope of the invention as defined in the attached Claims. Characteristics that have only been described for a specific execution form are also applicable to other described execution forms. Characteristics from different execution forms can only be combined in order to achieve an alternative execution form. Characteristics that are not emphatically described as being essential may be omitted.

The invention will now be explained in more detail in the following examples.

### Materials

The anti-microbial properties of the following dispersions were tested:
- dispersion disclosed in Example 7H of WO02/10242 (comparative example B);
- a polyurethane/acrylate dispersion without anti-microbial compound (comparative example C);
- four polyurethane/acrylate dispersions with anti-microbial compounds according to the present invention (examples 1-4); and
- two polyurethane dispersion with anti-microbial compounds according to the present invention (examples 5 and 6).

Standard polyethylene was used as a substrate on which 60 µm films of the above described dispersions were applied with the aid of a Baker applicator (TQC Baker Applicator, Type VF2146). The applied films were dried for 48 hours under ambient conditions. As a control experiment, bacterial growth on an uncoated polyethylene film was tested (comparative example A)

### Preparation of anti-microbial compounds according to the present invention

### polymerization of diethylaminoehtylmetha-acrylate (DEAEMA)

Preparation of pDEAEMA: 120 grams (0.648 mol) of DEAEMA and 240 grams (3.328 mol) of THF were mixed in a 3 neck round bottom flask reactor. The reaction mixture was degassed under stirring with a magnet stirring bar at a speed of 5 RPM for at least 15 minutes.
0.01 grams (6.09x10⁻⁵ mol) Azobisisobutyronitrile (AIBN) was dissolved in 5 ml Toluene and in about 2 mL THF, because AIBN will only dissolve in THF, and the volume of Toluene is used as an intern standard. The total amount of THF should be 240 grams. The reaction mixture was heated to a temperature of 70°C. When the temperature of the reaction mixture was around 65°C, the Nitrogen inlet was removed, and the initiator AIBN dissolved in THF was added to the reaction mixture with a syringe. The reaction proceeded 260 minutes. The product obtained contained a large amount of THF. With the rotary evaporator the excess of THF was decreased. The obtained product was precipitated in H₂O. The obtained product was dried in a vacuum oven at 80°C for 24 hours.

### Quaternization of pDEAEMA: antimicrobial compound 1

The synthesized polymer (pDEAEMA) was dissolved in 3 times by weight of Acetone and 2 times excess of 1-bromotetradecane was added. The reaction proceeded during at least one week at reflux temperature about 70°C, after which the quaternization was complete, i.e. all tertiary amino-groups were quaternized and a compound according Fig 2 was obtained. The obtained product was precipitated in n-Hexane. The obtained product was dried in a vacuum oven at 80°C for 24 hours. Samples were taken during the reaction to follow kinetics by GC.

### Partial quaternization of pDEAEMA: antimicrobial compound 2

The synthesized polymer (pDEAEMA) was dissolved in 3 times by weight of Acetone and 2 times excess of 1-bromotetradecane was added. The reaction proceeded during 130 hours at a reflux temperature of about 70°C, after which the pDEAEMA was partially quaternized and a copolymer according to Fig. 3 was obtained having a ratio BB1:BB2 of approximately 1:10. The obtained product was precipitated in n-Hexane. The obtained product was dried in a vacuum oven at 80°C for 24 hours. Samples were taken during the reaction to follow kinetics by GC.

### Partial quaternization of pDEAEMA: antimicrobial compound 3

The synthesized polymer (pDEAEMA) was dissolved in 3 times by weight of Acetone and 2 times excess of 1-bromotetradecane was added. The reaction proceeded during 78 hours at a reflux temperature of about 70°C after which the pDEAEMA was partially quaternized and a copolymer according to Fig. 3 was obtained having a ratio BB1:BB2 of approximately 1:5. The obtained product was precipitated in n-Hexane. The obtained product was dried in a vacuum oven at 80°C for 24 hours. Samples were taken during the reaction to follow kinetics by GC.

### Partial quaternization of pDEAEMA: antimicrobial compound 4

The synthesized polymer (pDEAEMA) was dissolved in 3 times by weight of Acetone and 2 times excess of 1-bromotetradecane was added. The reaction proceeded during 48 hours at a reflux temperature of about 70°C, after which the pDEAEMA was partially quaternized and a copolymer according to Fig. 3 was obtained having a ratio BB1:BB2 of approximately 10:1. The obtained product was precipitated in n-Hexane. The obtained product was dried in a vacuum oven at 80°C for 24 hours. Samples were taken during the reaction to follow kinetics by GC.

### Preparation of the dispersions disclosed in Example 7H of WOO2/1O242

### Comparative example B

The following pre-polymer was prepared as follows with an NCO/OH ratio of about 2. In a reaction vessel, under nitrogen purge and with good stirring, 132 g of *N*-Methyl-2-pyrrolidone (NMP) was mixed with 40 g dimethylolpropionic acid (DMPA, 67.1 equivalent wt) and heated to about 60°C. To this mixture was added 172 g PPG1025 (490.4 equivalent wt) and 456 g ACCLAIM 3201 (1484.1 equivalent wt). Then, 332 g DEDMODUR W isocyanate (132.2 equivalent weight) was added along with 9 drops of dibutyl-tin-dilaurate. This mixture was heated at about 80°C for 80 minutes. The temperature was reduced to 72°C for an additional 40 minutes. The pre-polymer was relatively low in viscosity.

A dispersion was prepared by adding 45.3 ml of 1N NaOH with 212.1 g of 85: 15 (wt/wt) Isopropyl alcohol (IPA)-water mixture followed by 172.2 g of warm (60°C) pre-polymer under high shear mixing. About 5.8 g EDA (ethylenediamine) was added slowly, i. e., dropwise. To the IPA/water dispersions, 11 wt% of PVP-iodine USP was added.

### Preparation of polyurethane/acrylate dispersion with anti-microbial compound according to the present invention

### Example 1

Step 1: A polyurethane pre-polymer was prepared as follows: In a reaction vessel, under nitrogen purge and with good stirring, 7.5 g. buthylmethacrylaat (BMA) was mixed with 2,5 g dimethylolpropionic acid (DMPA), 17.6 g. isophorone diisocyanaat (IPDI), 22.4 g. poly Tetra hydro furane (pTHF) and heated to about 60°C. The reaction mixture had an NCO/OH ratio of about 2. To this mixture was added 2 drops of dibutyl-tin-dilaurate. This mixture was heated at about 80°C for 120 minutes. The temperature was reduced to about 70°C for an additional 40 minutes. The pre-polymer was relatively low in viscosity. BMA was used as a solvent and polymerized in step 6 to obtain a polyurethane/acrylated dispersion.
Step 2: To the mixture obtained in step 1, 2.12 g triethylamine (TEA) was added and mixed for 20 minutes.
Step 3: The prepared anti-microbial compound 1 which was dissolved in acetone 20% w/w (5,0g) was added to the mixture obtained in step 2 and mixed for about 20 min.
Step 4: A dispersion was prepared by adding 4 drops of TEGO Foamex 805 to 250 ml of water, followed by dropwise adding under high shear mixing of 172.2 g of warm (60°C) pre-polymer mixture as obtained in step 3.
Step 5: About 5.8 g ethylenediamine (EDA) was added slowly, i.e. dropwise to the mixture obtained in step 4 in order to achieve chain extension of the urethane pre-polymer.
Step 6: Butyl methactylate (BMA) (see step 1) was polymerized by means of a redox reaction with i-ascorbine acid, tert-butyl hydro peroxide (t-BHPO) as initiator and Fe²⁺ as catalyst.

### Example 2

Step 1: The same as in example 1.
Step 2: To the mixture obtained in step 1, 2.02 g. of triethylamine (TEA) was added and mixed for 20 minutes.
Step 3: The prepared anti-microbial compound 2 which was dissolved in acetone 20% w/w (5,0g) was added to the mixture obtained in step 2 and mixed for about 60 min.
Steps 4 - 6: The same as in example 1.

### Example 3

Step 1: The same as in example 1.
Step 2: To the mixture obtained in step 1, 1.72 g. of triethylamine (TEA) was added and mixed for 20 minutes.
Step 3: The prepared anti-microbial compound 3 which was dissolved in acetone 20% w/w (5,0g) was added to the mixture obtained in step 2 and mixed for about 60 min.
Steps 4-6: The same as in example 1.

### Example 4

Step 1: The same as in example 1.
Step 2: To the mixture obtained in step 1, 1.52 g. of triethylamine (TEA) was added and mixed for 20 minutes.
Step 3 The prepared anti microbial compound 4 which was dissolved in acetone 20% w/w (5,0g) was added to the mixture obtained in step 2 and mixed for about 60 min.
Steps 4-6: The same as in example 1.

### Preparation of polyurethane/acrylate dispersion without anti-microbial compound according to the present invention

### Comparative example C

A dispersion without anti-microbial compound is prepared according to example 1, without performing step 3.

### Preparation of polyurethane dispersion with anti-microbial compound according to the present invention

### Example 5

Step 1: A polyurethane pre-polymer was prepared as follows: In a reaction vessel, under nitrogen purge and with good stirring, 7.5 g. *N*-Methyl-2-pyrrolidone (NMP), as a solvent, was mixed with 2,5 g. dimethylolpropionic acid (DMPA), 17.6 g. isophorone diisocyanaat (IPDI), and 22.4 g. poly Tetra hydro furane (pTHF) and heated to about 60°C. The reaction mixture had an NCO/OH ratio of about 2. To this mixture was added 2 drops of dibutyl-tin-dilaurate. This mixture was heated at about 80°C for 120 minutes. The temperature was reduced to about 70°C for an additional 40 minutes. The pre-polymer was relatively low in viscosity.
Steps 2-5: The same as in example 1

The obtained product is a polyurethane dispersion comprising an anti-microbial compound according to the present invention.

### Example 6

Step 1: The same as in example 5.
Step 2: To the mixture obtained in step 1, 1.52 g. of triethylamine (TEA) was added and mixed for 20 minutes.
Step 3: The prepared anti microbial compound 4 which was dissolved in acetone 20% w/w (5,0g) was added to the mixture obtained in step 2 and mixed for about 60 min.
Steps 4-5: The same as in example 1.

### Test method

The anti-microbial properties of the above mentioned test-materials have been tested according to the Japanese Industrial Standard JIS Z 2801:2000.

Samples of each test-material were treated with a suspension comprising test-bacteria, such as MRSA, Escherichia Coli, Salmonella and Pseudomonas and a physiological salt, such as NaCl or KCI.

To maintain good contact between the test-bacteria and the test-material, the surface of the test-material that was treated with the suspension comprising test-bacteria was covered with a sterile polyethylene film.

The bacteria populations on all samples were measured (counted) before incubation (t=0) and after incubating the samples for 24 hours at 35°C at saturation humidity, which conditions are ideal for optimal growth of the bacteria populations. The amounts of bacteria on a surface is expressed in Colony Forming Units, (CFU).

As a reference a control experiment was performed on an uncoated polyethylene film (comparative example A). All tests were repeated twice.

### Testresults

### Comparative example A (control experiments)

The average results of the control experiments are shown in Table 1

**Table 1: average results of comparative example A**

| *Control experiments* | | | |
|---|---|---|---|
| Bacteria | CFU (at t=0) | CFU (at t=24hrs) | % growth |
| MRSA | 1.17 ^{∗} 10⁶ | 1.31 ^{∗} 10⁶ | 12 |
| Escherichia Coli | 1.17 ^{∗} 10⁶ | 1.11 ^{∗} 10⁷ | 849 |
| Salmonella | 3.57 ^{∗} 10⁶ | 8.91 ^{∗} 10⁶ | 150 |
| Pseudomonas | 3.57 ^{∗} 10⁶ | 9.11 ^{∗} 10⁶ | 155 |

Table 1 shows that the number of colony forming units (CFU) increases when an uncoated film, treated with a dispersion comprising test-bacteria, is incubated for 24 hours at 35°C.

### Comparative example B (dispersion of Example 7H in WO02/10242)

The average results of comparative example B are shown in Table 2

**Table 2: average results of comparative example B**

| *dispersion of Example 7H in WO02*/*10242* | | | |
|---|---|---|---|
| Bacteria | CFU (at t=0) | CFU (at t=24hrs) | % reduction¹ |
| MRSA | 1.17 ^{∗} 10⁶ | 1.12 ^{∗} 10² | 99.99 |
| Escherichia Coli | 1.17 ^{∗} 10⁶ | 1.32 ^{∗} 10² | 99.99 |
| Salmonella | 3.57 ^{∗} 10⁶ | 5.82 ^{∗} 10² | 99.98 |
| Pseudomonas | 3.57 ^{∗} 10⁶ | 9.12 ^{*} 10² | 99.97 |

| | | | |
|---|---|---|---|
| ¹ the reduction has been calculated as follows : 100%^{∗}(1-[CFU at t=24hrs]/[CFU at t=0]) | | | |

### Comparative example C (a polyurethane/acrylate dispersion without anti-microbial compound)

The average results of comparative example C are shown in Table 3

Table 3 shows that the number of colony forming units (CFU) is reduced with respect to the control experiments after incubation. Table 3 also shows that the polyurethane/acrylate dispersion without anti-microbial compound has an intrinsic reducing effect on MRSA and Pseudomonas colonies of respectively 90.2% and 46.8%

**Table 3: average results of comparative example C**

| *a polyurethane*/*acrylate dispersion without anti-microbial compound* | | | |
|---|---|---|---|
| Bacteria | CFU (at t=0) | CFU (at t=24hrs) | % reduction¹ |
| MRSA | 1.17 ^{∗} 10⁶ | 1.15 ^{∗} 10⁵ | 90.17 |
| Escherichia Coli | 1.17 ^{∗} 10⁶ | 1.45 ^{∗} 10⁶ | -23.93² |
| Salmonella | 3.57 ^{∗} 10⁶ | 4.95 ^{∗} 10⁶ | -38.66² |
| Pseudomonas | 3.57 ^{∗} 10⁶ | 1.90 ^{∗} 10⁶ | 46.78 |

| | | | |
|---|---|---|---|
| ¹ the reduction has been calculated as follows : 100%^{∗}(1-[CFU at t=24hrs]/[CFU at t=0]) ² negative reduction indicates bacterial growth | | | |

### Example 1 (a polyurethane/acrylate dispersion with anti-microbial compound 1)

The average results of example 1 are shown in Table 4

Table 4 shows that the number of colony forming units (CFU) is almost completely reduced on a surface treated with a polyurethane/acrylate dispersion with anti-microbial compound 1. It also shows that the reduction is a least a factor 10 higher than for a surface treated with a dispersion of Example 7H in WO02/10242 (compare Tables 4 and 2). Table 4 further shows that the use of an anti-microbial agent has a significant effect on the reduction of bacteria with respect to the same dispersion without the anti-microbial agent (compare Tables 4 and 3).

**Table 4: average results of example 1**

| *a polyurethane*/*acrylate dispersion with anti-microbial compound 1* | | | |
|---|---|---|---|
| Bacteria | CFU (at t=0) | CFU (at t=24hrs) | % reduction¹ |
| MRSA | 1.17 ^{∗} 10⁶ | 1.15 ^{∗} 10¹ | 99.999 |
| Escherichia Coli | 1.17 ^{∗} 10⁶ | 1.10 ^{∗} 10¹ | 99.999 |
| Salmonella | 3.57 ^{∗} 10⁶ | 1.00 ^{∗} 10^{1 (3)} | >99.999 |
| Pseudomonas | 3.57 ^{∗} 10⁶ | 1.00 ^{∗} 10^{1 (3)} | >99.999 |

| | | | |
|---|---|---|---|
| ¹ the reduction has been calculated as follows : 100%^{∗}(1-[CFU at t=24hrs]/[CFU at t=0]) ³ 10 CFU is the lower detection limit | | | |

### Example 2 (a polyurethane/acrylate dispersion with anti-microbial compound 2)

The average results of example 2 are shown in Table 5.

**Table 5: average results of example 2**

| *a polyurethane*/*acrylate dispersion with anti-microbial compound 2* | | | |
|---|---|---|---|
| Bacteria | CFU (at t=0) | CFU (at t=24hrs) | % reduction¹ |
| MRSA | 1.17 ^{∗} 10⁶ | 1.15 ^{∗} 10¹ | 99.999 |
| Escherichia Coli | 1.17 ^{∗} 10⁶ | 1.70 ^{∗} 10¹ | 99.999 |
| Salmonella | 3.57 ^{∗} 10⁶ | 1.00 ^{∗} 10^{1 (3)} | >99.999 |
| Pseudomonas | 3.57 ^{∗} 10⁶ | 1.00 ^{∗} 10^{1 (3)} | >99.999 |

| | | | |
|---|---|---|---|
| ¹ the reduction has been calculated as follows : 100%^{∗}(1-[CFU at t=24hrs]/[CFU at t=0]) ³ 10 CFU is the lower detection limit | | | |

### Example 3 (a polyurethane/acrylate dispersion with anti-microbial compound 3)

The average results of example 3 are shown in Table 6.

**Table 6: average results of example 3**

| *a polyurethane*/*acrylate dispersion with anti-microbial compound 3* | | | |
|---|---|---|---|
| Bacteria | CFU (at t=0) | CFU (at t=24hrs) | % reduction¹ |
| MRSA | 1.17 ^{∗} 10⁶ | 1.45 ^{∗} 10¹ | 99.999 |
| Escherichia Coli | 1.17 ^{∗} 10⁶ | 3.70 ^{∗} 10¹ | 99.997 |
| Salmonella | 3.57 ^{∗} 10⁶ | 1.00 ^{∗} 10^{1 (3)} | >99.999 |
| Pseudomonas | 3.57 ^{∗} 10⁶ | 1.00 ^{∗} 10^{1 (3)} | >99.999 |

| | | | |
|---|---|---|---|
| ¹ the reduction has been calculated as follows : 100%^{∗}(1-[CFU at t=24hrs]/[CFU at t=0]) ³ 10 CFU is the lower detection limit | | | |

### Example 4 (a polyurethane/acrylate dispersion with anti-microbial compound 4)

The average results of example 4 are shown in Table 7.

**Table 7: average results of example 4**

| *a polyurethane*/*acrylate dispersion with anti-microbial compound 4* | | | |
|---|---|---|---|
| Bacteria | CFU (at t=0) | CFU (at t=24hrs) | % reduction¹ |
| MRSA | 1.17 ^{∗} 10⁶ | 1.17 ^{∗} 10⁴ | 99.000 |
| Escherichia Coli | 1.17 ^{∗} 10⁶ | 2.70 ^{∗} 10³ | 99.769 |
| Salmonella | 3.57 ^{∗} 10⁶ | 5.90 ^{∗} 10⁴ | 98.347 |
| Pseudomonas | 3.57 ^{∗} 10⁶ | 4.60 ^{∗} 10⁴ | 98.711 |

| | | | |
|---|---|---|---|
| ¹ the reduction has been calculated as follows : 100%^{∗}(1-[CFU at t=24hrs]/[CFU at t=0]) ³ 10 CFU is the lower detection limit | | | |

### Example 5 (a polyurethane dispersion with anti-microbial compound 1)

The average results of example 5 are shown in Table 8.

**Table 8: average results of example 5**

| *a polyurethane dispersion with anti-microbial compound 1* | | | |
|---|---|---|---|
| Bacteria | CFU (at t=0) | CFU (at t=24hrs) | % reduction¹ |
| MRSA | 1.17 ^{∗} 10⁶ | 5.17 ^{∗} 10² | 99.956 |
| Escherichia Coli | 1.17 ^{∗} 10⁶ | 4.40 ^{∗} 10² | 99.962 |
| Salmonella | 3.57 ^{∗} 10⁶ | 1.90 ^{∗} 10² | 99.995 |
| Pseudomonas | 3.57 ^{∗} 10⁶ | 1.60 ^{∗} 10² | 99.996 |

| | | | |
|---|---|---|---|
| ¹ the reduction has been calculated as follows : 100%^{∗}(1-[CFU at t=24hrs]/[CFU at t=0]) | | | |

### Example 6 (a polyurethane dispersion with anti-microbial compound 4)

The average results of example 6 are shown in Table 9.

**Table 9: average results of example 6**

| *a polyurethane dispersion with anti-microbial compound 4* | | | |
|---|---|---|---|
| Bacteria | CFU (at t=0) | CFU (at t=24hrs) | % reduction¹ |
| MRSA | 1.17 ^{∗} 10⁶ | 1.47 ^{∗} 10³ | 99.874 |
| Escherichia Coli | 1.17 ^{∗} 10⁶ | 1.70 ^{∗} 10³ | 99.855 |
| Salmonella | 3.57 ^{∗} 10⁶ | 3.90 ^{∗} 10² | 99.989 |
| Pseudomonas | 3.57 ^{∗} 10⁶ | 4.60 ^{∗} 10² | 99.987 |

| | | | |
|---|---|---|---|
| ¹ the reduction has been calculated as follows : 100%^{∗}(1-[CFU at t=24hrs]/[CFU at t=0]) | | | |

It can be concluded that the polyurethane/acrylate or polyurethane dispersions comprising an anti-microbial compound according to the present invention show good anti-microbial properties (see examples 1-6). It can also be concluded that an anti-microbial compound having a ratio BB1:BB2 of at least 1:5 in a polyurethane/acrylate dispersion shows improved anti-microbial properties with respect to dispersions known from the prior art (comparative example B compared with examples 1-4).

## Claims

1. A water-borne polyurethane dispersion comprising:
a. a polyurethane polymer which is the reaction product of a poly-isocyanate, a polyactive hydrogen compound, an active hydrogen compound selected from the group consisting of a compound containing an ionic group, a compound containing a moiety capable of forming an anionic group, a compound containing a polyester, polyether or polycarbonate group having a ratio of 5 or less carbon atoms for each oxygen atom, and mixtures thereof, and a chain extender; and
b. an anti-microbial compound which is a copolymer comprising building blocks [BB1] and [BB2]: 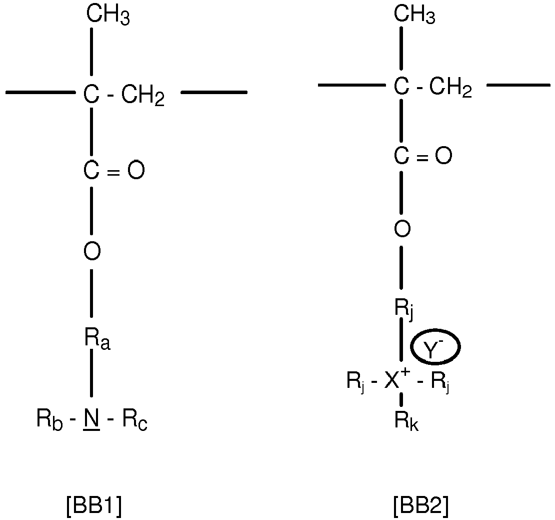
wherein X⁺ is a positively charged ion with valency n, n is 4 or 5, Y⁻ is a negatively charged ion; and
wherein the polyurethane polymer is neutralized with [BB1] of the copolymer and Ra, Rb and Rc are hydrocarbyl groups selected from aliphatic, cyclo-aliphatic and aromatic groups, that may be independently of one another the same or different and wherein Rj independently denotes a C1-C20 group and Rk denotes a longer chain having between 3 and 100 carbon atoms.

2. A polyurethane dispersion according to claim 1, wherein the positively charged ion (X⁺) is selected from the group consisting of nitrogen, phosphor and sulphur; and the negatively charged ion (Y-) is a halogen ion selected from the group consisting of chlorine, bromine, iodine and fluorine.

3. A polyurethane dispersion according to claim 1, wherein the ratio BB1:BB2 is at least 1:5.

4. A polyurethane dispersion according to claim 1, wherein Rⱼ is an ethyl group and Rₖ is a C₁₄ group.

5. A polyurethane dispersion according to any one of claims 1-4, wherein the polyisocyanate is selected from the group consisting of isophorone-di-isocyanate (IPDI), dicyclohexylmethane 4,4'diisocyanate (H₁₂MDI), diphenylmethane 4,4'-diisocyanate (MDI), hexamethylene diisocyanate (HDI) and toluene diisocyanate (TDI).

6. A polyurethane dispersion according to any one of claims 1-5, wherein the polyactive hydrogen compound is a polyol selected from the group consisting of polyetherdiol, polycarbonatediol and polyesterdiol.

7. A polyurethane dispersion according to any one of claims 1-6, wherein the chain extender is a diamine of the formula H₂N-R*-NH₂, wherein R* is a C₁-C₁₀₀ hydrocarbyl chain including branched and unbranched chains, substituted chains with groups containing heteroatoms selected from S, O and N, chains containing aliphatic and/or cyclo-aliphatic and/or aromatic groups in the backbone or as substituents, saturated and unsaturated chains.

8. A polyurethane dispersion according to claim 7, wherein one or more of H-atoms of one or more of the -CH₂- of the hydrocarbyl chain (R*) are substituted by NH₂-groups.

9. Method for the preparation of a polyurethane dispersion comprising the steps of:
1. preparing a urethane-pre-polymer composition (UPP) which is the reaction product of a poly-isocyanate, a polyactive hydrogen compound, and an active hydrogen compound selected from the group consisting of a compound containing an ionic group, a compound containing a moiety capable of forming an anionic group, a compound containing a polyester, polyether or polycarbonate group having a ratio of 5 or less carbon atoms for each oxygen atom, and mixtures thereof;
2. neutralizing the UPP with an anti-microbial compound which is a copolymer comprising building blocks [BB1] and [BB2]: 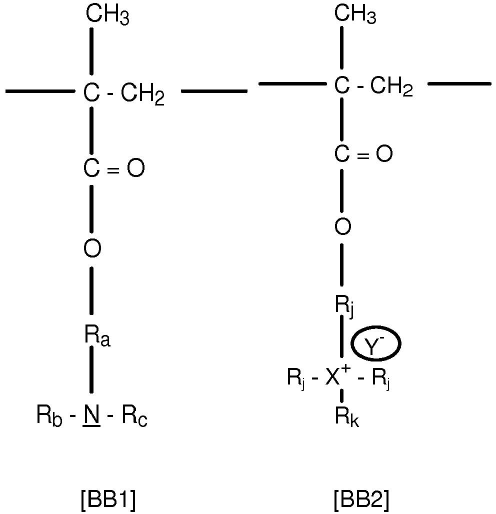 wherein X⁺ is a positively charged ion with valency n, n is 4 or 5, Y⁻ is a negatively charged ion; Ra, Rb and Rc are hydrocarbyl groups selected from aliphatic, cyclo-aliphatic and aromatic groups, that may be independently of one another the same or different; and wherein Rj independently denotes a C1-C20 group and Rk denotes a longer chain having between 3 and 100 carbon atoms; to obtain a neutralized urethane-pre-polymer (NUPP);
3. mixing the thus obtained composition with water at a temperature in the range of 10°C to 60°C;
4. polymerizing the NUPP by reaction with a chain extender.

10. Method for the preparation of a polyurethane dispersion according to claim 9, wherein the poly-isocyanate is of the formula: OCN-R1-NCO; the polyactive hydrogen compound is a polyol of the formula HO-R2-OH and the active hydrogen compound is a C₁-C₅ diol with an organic acid group (COOH) of the formula: 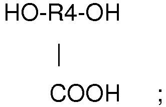 and wherein R1 and R2 are indicative of branched and unbranched chains, substituted chains with groups containing heteroatoms such as S and/or O and/or N, chains containing aliphatic and/or cyclo-aliphatic and/or aromatic groups in the backbone or as substituents, saturated and unsaturated chains, having 1-100, carbon atoms and wherein R4 is a C₁-C₅ hydrocarbyl group.

11. Method for the application of a polyurethane dispersion according to any one of claims 1-8 or obtained by a method according to any one of claims 9-10 as a coating on a surface comprising the steps of
- applying the polyurethane dispersion onto a surface of an article to be treated;
- evaporating the water whereby [BB2] assumes the position of [BB1].

12. Article treated with a polyurethane dispersion according to any one of claims 1-8 or obtained by a method according to any one of claims 9-10, according to the method of claim 11.

## Patentansprüche

1. Wässrige Polyurethandispersion, die Folgendes umfasst:
a. ein Polyurethanpolymer, bei dem es sich um das Reaktionsprodukt von einem Polyisocyanat, einer polyaktiven Wasserstoffverbindung, einer aktiven Wasserstoffverbindung, die aus der Gruppe bestehend aus einer Verbindung, die eine ionische Gruppe enthält, einer Verbindung, die eine Gruppierung, die in der Lage ist, eine anionische Gruppe zu bilden, enthält, einer Verbindung, die eine Polyester-, Polyether- oder Polycarbonatgruppe, die ein Verhältnis von 5 oder weniger Kohlenstoffatomen für jedes Sauerstoffatom aufweist, enthält, und Mischungen davon ausgewählt ist, und einem Kettenverlängerer handelt, und
b. eine antimikrobielle Verbindung, bei der es sich um ein Copolymer handelt, das die folgenden Bausteine [BB1] und [BB2] umfasst: 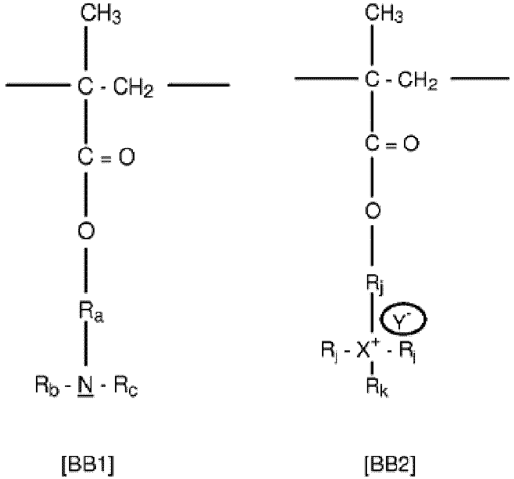
wobei X⁺ für ein positiv geladenes Ion mit der Valenz n, wobei n 4 oder 5 ist, steht, Y⁻ für ein negativ geladenes Ion steht und
wobei das Polyurethanpolymer mit [BB1] des Copolymers neutralisiert ist und Ra, Rb and Rc für aus aliphatischen, cycloaliphatischen und aromatischen Gruppen ausgewählte Hydrocarbylgruppen stehen, die unabhängig voneinander gleich oder voneinander verschieden sein können, und wobei Rj unabhängig eine C1-C20-Gruppe bezeichnet und Rk eine längere Kette, die zwischen 3 und 100 Kohlenstoffatome aufweist, bezeichnet.

2. Polyurethandispersion nach Anspruch 1, wobei das positiv geladene Ion (X⁺) aus der Gruppe bestehend aus Stickstoff, Phosphor und Schwefel ausgewählt ist und es sich bei dem negativ geladenen Ion (Y⁻) um ein aus der Gruppe bestehend aus Chlor, Brom, Iod und Fluor ausgewähltes Halogenion handelt.

3. Polyurethandispersion nach Anspruch 1, wobei das Verhältnis BB1:BB2 mindestens 1:5 beträgt.

4. Polyurethandispersion nach Anspruch 1, wobei es sich bei Rⱼ um eine Ethylgruppe handelt und bei Rₖ um eine C₁₄-Gruppe handelt.

5. Polyurethandispersion nach einem der Ansprüche 1-4, wobei das Polyisocyanat aus der Gruppe bestehend aus Isophorondiisocyanat (IPDI), Dicyclohexylmethan-4,4'diisocyanat (H₁₂MDI), Diphenylmethan-4,4'-Diisocyanat (MDI), Hexamethylendiisocyanat (HDI) und Toluoldiisocyanat (TDI) ausgewählt ist.

6. Polyurethandispersion nach einem der Ansprüche 1-5, wobei es sich bei der polyaktiven Wasserstoffverbindung um ein aus der Gruppe bestehend aus Polyetherdiol, Polycarbonatdiol und Polyesterdiol ausgewähltes Polyol handelt.

7. Polyurethandispersion nach einem der Ansprüche 1-6, wobei es sich bei dem Kettenverlängerer um ein Diamin der Formel H₂N-R*-NH₂ handelt, wobei R* für eine C₁-C₁₀₀-Hydrocarbylgruppe einschließlich verzweigter und unverzweigter Ketten, Ketten, die mit Gruppen, die aus S, O und N ausgewählte Heteroatome enthalten, substituiert sind, Ketten, die im Grundgerüst oder als Substituenten aliphatische und/oder cycloaliphatische und/oder aromatische Gruppen enthalten, gesättigter und ungesättigter Ketten steht.

8. Polyurethandispersion nach Anspruch 7, wobei ein oder mehrere H-Atome einer oder mehrerer -CH₂- der Hydrocarbylkette (R*) durch NH₂-Gruppen substituiert sind.

9. Verfahren zur Herstellung einer Polyurethandispersion, das die folgenden Schritte umfasst:
1. Herstellen einer Urethanprepolymer-Zusammensetzung (UPP), bei der es sich um das Reaktionsprodukt von einem Polyisocyanat, einer polyaktiven Wasserstoffverbindung und einer aktiven Wasserstoffverbindung, die aus der Gruppe bestehend aus einer Verbindung, die eine ionische Gruppe enthält, einer Verbindung, die eine Gruppierung, die in der Lage ist, eine anionische Gruppe zu bilden, enthält, einer Verbindung, die eine Polyester-, Polyether- oder Polycarbonatgruppe, die ein Verhältnis von 5 oder weniger Kohlenstoffatomen für jedes Sauerstoffatom aufweist, enthält, und Mischungen davon ausgewählt ist, handelt;
2. Neutralisieren der UPP mit einer antimikrobiellen Verbindung, bei der es sich um ein Copolymer handelt, das die folgenden Bausteine [BB1] und [BB2] umfasst: 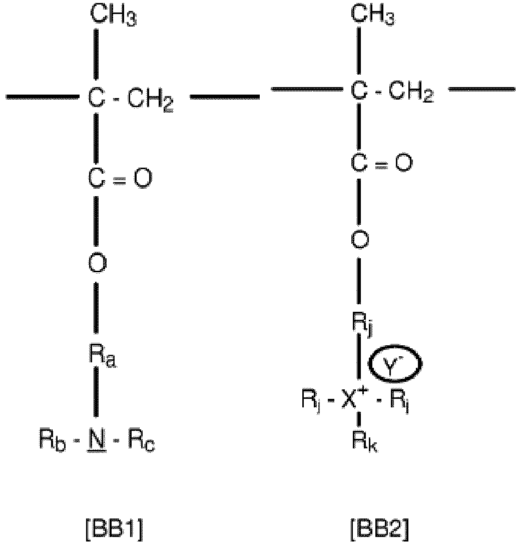 wobei X⁺ für ein positiv geladenes Ion mit der Valenz n, wobei n 4 oder 5 ist, steht, Y⁻ für ein negativ geladenes Ion steht; Ra, Rb and Rc für aus aliphatischen, cycloaliphatischen, und aromatischen Gruppen ausgewählte Hydrocarbylgruppen stehen, die unabhängig voneinander gleich oder voneinander verschieden sein können und wobei Rj unabhängig eine C1-C2O-Gruppe bezeichnet und Rk eine längere Kette, die zwischen 3 und 100 Kohlenstoffatome aufweist, bezeichnet; zum Erhalt eines neutralisierten Urethanprepolymers (NUPP);
3. Mischen der so erhaltenen Zusammensetzung mit Wasser bei einer Temperatur im Bereich von 10 °C bis 60 °C;
4. Polymerisieren des NUPP durch Reaktion mit einem Kettenverlängerer.

10. Verfahren zur Herstellung einer Polyurethandispersion nach Anspruch 9, wobei das Polyisocyanat der Formel: OCN-R1-NCO entspricht; es sich bei der polyaktiven Wasserstoffverbindung um ein Polyol der Formel HO-R2-OH handelt und es sich bei der aktiven Wasserstoffverbindung um ein C₁-C₅-Diol mit einer Gruppe einer organischen Säure (COOH) der Formel: 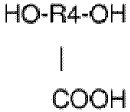 handelt und wobei R1 und R2 verzweigte und unverzweigte Ketten, substituierte Ketten mit Gruppen, die Heteroatome wie S und/oder O und/oder N enthalten, Ketten, die im Grundgerüst oder als Substituenten aliphatische und/oder cycloaliphatische und/oder aromatische Gruppen enthalten, gesättigte und ungesättigte Ketten mit 1-100 Kohlenstoffatomen anzeigen und wobei R4 für eine C₁-C₅-Hydrocarbylgruppe steht.

11. Verfahren zur Anwendung einer Polyurethandispersion nach einem der Ansprüche 1-8 oder einer durch ein Verfahren nach einem der Ansprüche 9-10 erhaltenen Polyurethandispersion als ein Überzug auf einer Oberfläche, das die folgenden Schritte umfasst:
- Auftragen der Polyurethandispersion auf eine Oberfläche eines zu behandelnden Gegenstands;
- Verdampfen des Wassers, wodurch [BB2] die Position von [BB1] annimmt.

12. Mit einer Polyurethandispersion nach einem der Ansprüche 1-8 oder einer durch ein Verfahren nach einem der Ansprüche 9-10 erhaltenen Polyurethandispersion behandelter Gegenstand nach dem Verfahren aus Anspruch 11.

## Revendications

1. Dispersion de polyuréthane dans de l'eau comprenant :
a. un polymère polyuréthane qui est le produit réactionnel d'un polyisocyanate, d'un composé à plusieurs hydrogènes actifs, d'un composé à hydrogène actif choisi dans le groupe constitué par un composé contenant un groupe ionique, un composé contenant une fraction capable de former un groupe anionique, un composé contenant un groupe polyester, polyéther ou polycarbonate ayant un taux d'atomes de carbone inférieur ou égal à 5 pour chaque atome d'oxygène et des mélanges de ceux-ci, et d'un allongeur de chaîne ; et
b. un composé antimicrobien qui est un copolymère comprenant des synthons [BB1] et [BB2] : 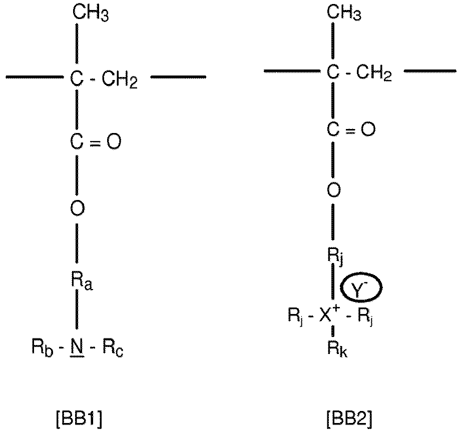
X⁺ étant un ion portant une charge positive ayant une valence n, n valant 4 ou 5, Y⁻ étant un ion portant une charge négative ; et
le polymère polyuréthane étant neutralisé avec [BB1] du copolymère et Rₐ, R_{b} et R_{c} étant des groupes hydrocarbyle choisis parmi des groupes aliphatiques, cycloaliphatiques et aromatiques, qui peuvent être indépendamment les uns des autres identiques ou différents et Rⱼ désignant indépendamment un groupe en C₁-C₂₀ et Rₖ désignant une plus longue chaîne ayant entre 3 et 100 atomes de carbone.

2. Dispersion de polyuréthane selon la revendication 1, dans laquelle l'ion portant une charge positive (X⁺) est choisi dans le groupe constitué par l'azote, le phosphore et le soufre ; et l'ion portant une charge négative (Y⁻) est un ion d'halogène choisi dans le groupe constitué par le chlore, le brome, l'iode et le fluor.

3. Dispersion de polyuréthane selon la revendication 1, dans laquelle le rapport BB1:BB2 est d'au moins 1:5.

4. Dispersion de polyuréthane selon la revendication 1, dans laquelle Rⱼ est un groupe éthyle et Rₖ est un groupe en C₁₄.

5. Dispersion de polyuréthane selon l'une quelconque des revendications 1-4, dans laquelle le polyisocyanate est choisi dans le groupe constitué par le diisocyanate d'isophorone (IPDI), le 4,4'-diisocyanate de dicyclohexylméthane (H₁₂MDI), le 4,4'-diisocyanate de diphénylméthane (MDI), le diisocyanate d'hexaméthylène (HDI) et le diisocyanate de toluène (TDI).

6. Dispersion de polyuréthane selon l'une quelconque des revendications 1-5, dans laquelle le composé à plusieurs hydrogènes actifs est un polyol choisi dans le groupe constitué par un diol de polyéther, un diol de polycarbonate et un diol de polyester.

7. Dispersion de polyuréthane selon l'une quelconque des revendications 1-6, dans laquelle l'allongeur de chaîne est une diamine de formule H₂N-R*-NH₂, R* étant une chaîne hydrocarbyle en C₁-C₁₀₀ contenant des chaînes ramifiées et non ramifiées, des chaînes substituées par des groupes contenant des hétéroatomes choisis parmi S, O et N, des chaînes contenant des groupes aliphatiques et/ou cycloaliphatiques et/ou aromatiques dans la chaîne principale ou en tant que substituants, des chaînes saturées et insaturées.

8. Dispersion de polyuréthane selon la revendication 7, dans laquelle un ou plusieurs des atomes de H d'un ou plusieurs des -CH₂- de la chaîne hydrocarbyle (R*) sont remplacés par des groupes NH₂.

9. Procédé pour la préparation d'une dispersion de polyuréthane comprenant les étapes consistant à :
1. préparer une composition de prépolymère d'uréthane (UPP) qui est le produit réactionnel d'un polyisocyanate, d'un composé à plusieurs hydrogènes actifs et d'un composé à hydrogène actif choisi dans le groupe constitué par un composé contenant un groupe ionique, un composé contenant une fraction capable de former un groupe anionique, un composé contenant un groupe polyester, polyéther ou polycarbonate ayant un taux d'atomes de carbone inférieur ou égal à 5 pour chaque atome d'oxygène et des mélanges de ceux-ci ;
2. neutraliser l'UPP avec un composé antimicrobien qui est un copolymère comprenant des synthons [BB1] et [BB2] : 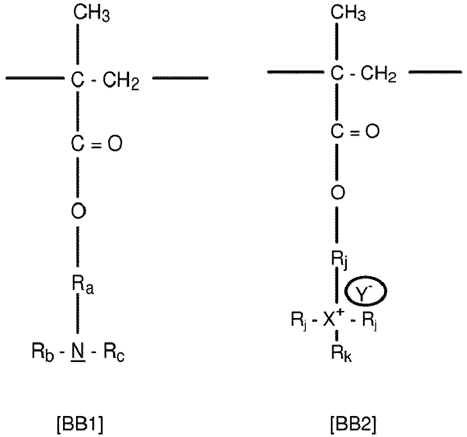 X⁺ étant un ion portant une charge positive ayant une valence n, n valant 4 ou 5, Y⁻ étant un ion portant une charge négative ; Rₐ, R_{b} et R_{c} étant des groupes hydrocarbyle choisis parmi des groupes aliphatiques, cycloaliphatiques et aromatiques, qui peuvent être indépendamment les uns des autres identiques ou différents ; et Rⱼ désignant indépendamment un groupe en C₁-C₂₀ et Rₖ désignant une plus longue chaîne ayant entre 3 et 100 atomes de carbone ; pour obtenir un prépolymère d'uréthane neutralisé (NUPP) ;
3. mélanger la composition ainsi obtenue avec de l'eau à une température dans la plage de 10 °C à 60 °C ;
4. polymériser le NUPP par réaction avec un allongeur de chaîne.

10. Procédé pour la préparation d'une dispersion de polyuréthane selon la revendication 9, dans lequel le polyisocyanate répond à la formule : OCN-R1-NCO ; le composé à plusieurs hydrogènes actifs est un polyol de formule HO-R2-OH et le composé à hydrogène actif est un diol en C₁-C₅ portant un groupe acide organique (COOH) de formule : 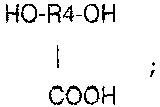 et dans lequel R1 et R2 représentent des chaînes ramifiées et non ramifiées, des chaînes substituées par des groupes contenant des hétéroatomes tels que S et/ou O et/ou N, des chaînes contenant des groupes aliphatiques et/ou cycloaliphatiques et/ou aromatiques dans la chaîne principale ou en tant que substituants, des chaînes saturées et insaturées, ayant 1-100 atomes de carbone et dans lequel R4 est un groupe hydrocarbyle en C₁-C₅.

11. Procédé pour l'application d'une dispersion de polyuréthane selon l'une quelconque des revendications 1-8 ou obtenue par un procédé selon l'une quelconque des revendications 9-10 en tant que revêtement sur une surface, comprenant les étapes consistant à
- appliquer la dispersion de polyuréthane sur une surface d'un article devant être traité ;
- faire évaporer l'eau moyennant quoi [BB2] assume les fonctions de [BB1].

12. Article traité avec une dispersion de polyuréthane selon l'une quelconque des revendications 1-8 ou obtenue par un procédé selon l'une quelconque des revendications 9-10, selon le procédé de la revendication 11.
